(19) Europäisches Patentamt
European Patent Office
Office européen des brevets

(11) EP 2 397 533 B1

(12) **EUROPEAN PATENT SPECIFICATION**

(45) Date of publication and mention of the grant of the patent:
**17.04.2013 Bulletin 2013/16**

(21) Application number: **10741272.8**

(22) Date of filing: **10.02.2010**

(51) Int Cl.:
***C09J 175/04*** *(2006.01)* ***C09J 4/02*** *(2006.01)*
***C09J 7/02*** *(2006.01)* ***C09J 11/06*** *(2006.01)*
***C09J 133/02*** *(2006.01)* ***C09J 133/14*** *(2006.01)*
***G02B 5/30*** *(2006.01)* ***G02F 1/1335*** *(2006.01)*

(86) International application number:
**PCT/JP2010/051997**

(87) International publication number:
**WO 2010/092995 (19.08.2010 Gazette 2010/33)**

(54) **RADIATION CURABLE ADHESIVE COMPOSITION FOR OPTICAL COMPONENTS AND ADHESIVE OPTICAL COMPONENT**

STRAHLUNGSHÄRTBARE HAFTZUSAMMENSETZUNG FÜR OPTISCHE KOMPONENTEN UND OPTISCHE HAFTKOMPONENTE

COMPOSITION ADHÉSIVE DE TYPE DURCISSABLE SOUS IRRADIATION POUR ÉLÉMENT OPTIQUE ET ÉLÉMENT OPTIQUE DE TYPE ADHÉSIF

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.02.2009 JP 2009032787**

(43) Date of publication of application:
**21.12.2011 Bulletin 2011/51**

(73) Proprietor: **Soken Chemical & Engineering Co., Ltd.**
**Toshima-ku**
**Tokyo 171-8531 (JP)**

(72) Inventors:
- **KOYAMA, Yuji**
**Sayama-shi**
**Saitama 350-1320 (JP)**
- **AN, Mingxing**
**Sayama-shi**
**Saitama 350-1320 (JP)**

(74) Representative: **de Bresser, Sara Jean**
**Dehns**
**St Bride's House**
**10 Salisbury Square**
**London EC4Y 8JD (GB)**

(56) References cited:
**JP-A- 7 056 334**
**JP-A- 9 236 916**
**JP-A- 63 210 182**
**JP-A- 2006 225 443**
**US-A1- 2005 255 325**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 397 533 B1

## Description

### Technical Field

The present invention relates to a radiation-curable adhesive composition for an optical component, and an adhesive optical component using the same. Specifically, the present invention relates to a radiation-curable adhesive composition for an optical component, the adhesive composition being used for bonding an optical component in a flat panel display (FPD), more specifically used for bonding an optical component such as a polarizing film to an adherend such as a liquid crystal cell, and an adhesive optical component using the same.

### Background Art

Laminates constituting an image display device such as a liquid crystal display device, an organic electroluminescence (EL) display devices, a plasma display panel (PDP), or the like include optical components (such as a polarizing film, a retardation film, an optical compensation film, a luminance-improving film, a light diffusion film, an antireflection film, an near-infrared-absorbing film, and an electromagnetic-wave-shielding film) bonded to each other with an adhesive therebetween.

Such an adhesive (adhesive composition for an optical component) for bonding such optical components requires not only adherence for bonding an optical component to an adherend but also a characteristic (durability) that stable adhesion is maintained between the optical component and the adherend after the bonding. Various adhesive compositions having these characteristics have been proposed. Acrylic adhesives are typically used from the standpoint that they have both transparency suitable for the application for bonding optical components and relatively good durability.

Meanwhile, recently, liquid crystal display devices and the like have been used for various applications and under various conditions. For example, they have been often used not only under the condition of room temperature but also under severe conditions of a high temperature and furthermore, a high temperature and a high humidity. Examples of applications under such severe conditions include applications to image display devices installed inside vehicles and measuring instruments for use outdoors.

In the case where a liquid crystal display device or the like is left to stand for a long time under such conditions, in particular, an optical component produced by using polyvinyl alcohol or the like as a raw material expands due to moisture absorption, resulting in dimensional deformation. In addition, once such dimensional deformation occurs, even if the temperature condition and the humidity condition are changed, the optical component does not completely return to its original dimensions. Unless a stress generated by this dimensional deformation is sufficiently absorbed or relieved by an adhesive composition bonding the optical component to a liquid crystal cell, detachment or floating occurs. As a result, problems such as light leakage and display unevenness (white spots) occur in the image display device. In particular, under high-temperature and high-humidity conditions, expansion deformation (dimensional deformation) of an optical component further increases. Thus, the above problems more likely occur in a liquid crystal cell.

For example, PTL 1 and PTL 2 disclose adhesive compositions having improved durability under high-temperature conditions or high-temperature and high-humidity conditions.

PTL 1 discloses "an adhesive composition containing 5 to 95 parts by mass of (A) a polymer having a (meth)acryloyloxy group, a weight-average molecular weight of 1,000 to 30,000, and a glass transition temperature of 0°C or lower (polymer (A)); and 5 to 95 parts by mass of (B) a polymer having a weight-average molecular weight of 200,000 to 2,000,000, and a glass transition temperature of 0°C or lower (polymer (B)) (where the total of the polymer (A) and the polymer (B) is 100 parts by mass)".

PTL 2 discloses "an adhesive for an optical component, the adhesive containing a polymer containing a (meth)acrylic acid ester as a main component, and a crosslinking agent, wherein the gel fraction of the adhesive is 30% or more and 60% or less, a sol component in the adhesive has a weight-average molecular weight of 100,000 or more and 500,000 or less measured by gel permeation chromatography (GPC), the molecular-weight distribution is 40 or more, and a polymer component having a molecular weight of 50,000 or less is 30% by weight or more and 80% by weight or less in the sol component".

### Citation List

#### Patent Literature

PTL 1: Japanese Unexamined Patent Application Publication No. 2006-316203
PTL 2: Japanese Unexamined Patent Application Publication No. 2003-34781

## Summary of Invention

### Technical Problem

However, in adhesive optical components including an adhesive layer composed of any of the above adhesives for an optical component, there is still a room for improving durability and light leakage resistance under high-temperature conditions and high-temperature and high-humidity conditions.

In view of the above problem in the related art, an object of the present invention is to provide a radiation-curable adhesive composition for an optical component, the adhesive composition being capable of exhibiting excellent durability even under high-temperature conditions and high-temperature and high-humidity conditions and capable of suppressing occurrence of light leakage when the adhesive composition is used for bonding a liquid crystal cell to an optical component, and an adhesive optical component using the same.

### Solution to Problem

As a result of intensive studies in order to solve the above problem, the inventors of the present invention found that an adhesive composition containing specific components exhibits a high tensile strength and flexibility suitable for enabling stable adhesion between an optical component and an adherend when light-cured, and exhibits excellent durability even under high-temperature conditions and high-temperature and high-humidity conditions, and that when the adhesive composition is used for bonding a liquid crystal cell to an optical component, occurrence of a problem such as light leakage can be significantly suppressed. This finding led to the completion of the present invention. The gist of the present invention is as follows.

A radiation-curable adhesive composition for an optical component of the present invention contains 100 parts by weight of a (meth)acrylic copolymer (A) composed of 80% to 99.8% by mass of an alkyl (meth)acrylate (a1), 0.1% to 10% by mass of a carboxyl-group-containing (meth)acrylic monomer (a2), and 0.1% to 10% by mass of a hydroxyl-group-containing (meth)acrylic monomer (a3) (where the total amount of (a1) to (a3) is 100% by mass), the (meth)acrylic copolymer (A) having a glass transition temperature of -20°C or lower and a weight-average molecular weight of 500,000 to 2,000,000;

2 to 20 parts by weight of a radiation-curable acrylic compound (B) having two (meth)acryloyl groups in its molecule;

3 to 50 parts by weight of a radiation-curable acrylic compound (C) represented by general formula (1) or (2) below:

[Chem. 1]

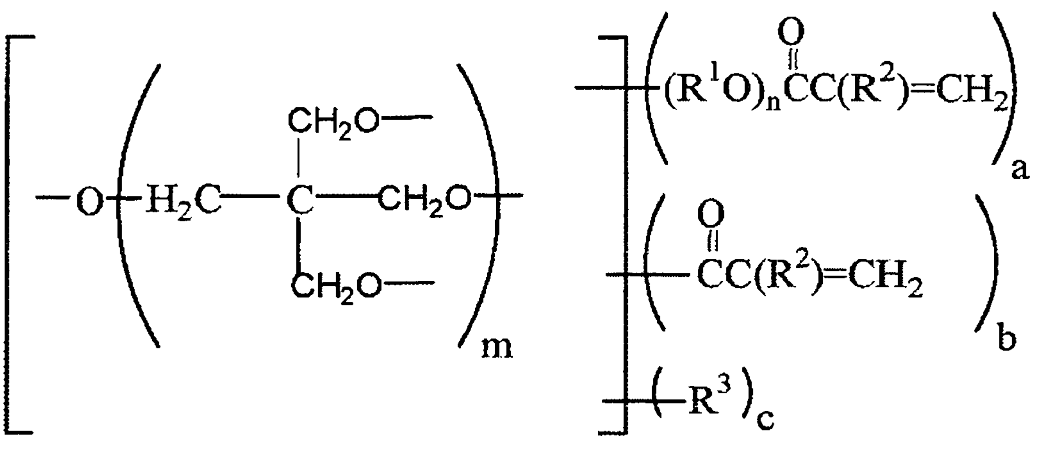

(1)

(where m is an integer of 1 to 5,

a is an integer of 1 or more, b is an integer of 0 or more, c is an integer of 0 or more, the sum of a and b is 3 to 10, and the condition a + b + c = 2m + 2 is satisfied,

n is an integer of 2 to 6,

$R^1$ represents an alkyl group which may have a substituent and which has 2 to 4 carbon atoms,

$R^2$ represents hydrogen or a methyl group, and

$R^3$ represents a hydrogen atom, a hydrocarbon group which may have a substituent, an oxygen-containing functional

group which may have a substituent, or a nitrogen-containing functional group which may have a substituent)

[Chem. 2]

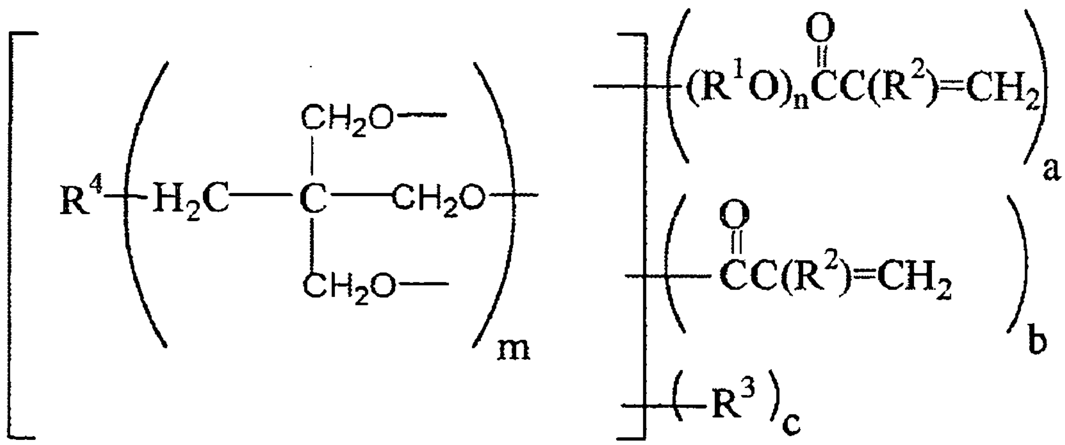

(2)

(where m is an integer of 1 to 5, a is an integer of 1 or more, b is an integer of 0 or more, c is an integer of 0 or more, the sum of a and b is 3 to 10, and the condition $a + b + c = 2m + 1$ is satisfied, n is an integer of 2 to 6,

$R^1$ represents an alkyl group which may have a substituent and which has 2 to 4 carbon atoms,

$R^2$ represents hydrogen or a methyl group, and

$R^3$ and $R^4$ each independently represent a hydrogen atom, a hydrocarbon group which may have a substituent, an oxygen-containing functional group which may have a substituent, or a nitrogen-containing functional group which may have a substituent);

0.1 to 10 parts by weight of a hydrogen abstraction-type photopolymerization initiator (D);

0.01 to 10 parts by weight of an isocyanate crosslinking agent (E) having two or more isocyanate groups in its molecule; and

0.01 to 3 parts by weight of a silane compound (F) having an organic functional group having reactivity with a carboxyl group,

in which the total amount of the amount of radiation-curable acrylic compound (B) mixed and the amount of radiation-curable acrylic compound (C) mixed is 5 to 60 parts by weight.

The radiation-curable acrylic compound (B) is preferably a compound represented by general formula (3) below:

[Chem. 3]

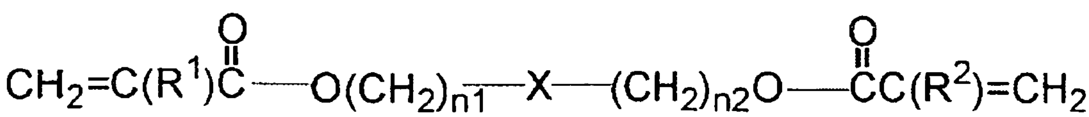

(3)

(where n1 and n2 each independently represent an integer of 0 to 10, $R^1$ and $R^2$ each independently represent a hydrogen atom or a methyl group,

X represents a linear or branched divalent alkyl group having 1 to 20 carbon atoms, a linear or branched divalent cycloalkyl group having 3 to 20 carbon atoms, an alkoxyl group represented by general formula (4) below, or a diphenylalkyl group represented by general formula (5) below)

[Chem. 4]

$$-(OC_nH_{2n})_m- \quad (4)$$

(where n represents an integer of 1 to 20, and m represents an integer of 1 to 10)

[Chem. 5] $\mathbf{Ar\text{-}C_nH_{2N}\text{-}Ar\text{-}}$ (5)

(where n represents an integer of 1 to 20, and Ar represents an aryl group which may have a substituent.) The radiation-curable acrylic compound (B) is preferably at least one compound selected from the group consisting of neopentyl glycol diacrylate, 1,9-nonanediol diacrylate, dimethylol tricyclodecane diacrylate, polypropylene glycol diacrylate, polyethylene glycol diacrylate, bisphenol A polyethylene glycol diacrylate, and α-phenyl-ω-acryloyloxypolyoxyethylene-formaldehyde polycondensate.

The radiation-curable acrylic compound (C) is preferably at least one compound selected from the group consisting of acrylic acid ester of dipentaerythritol caprolactone, acrylic acid ester of pentaerythritol ethylene oxide, and acrylic acid ester of trimethylolpropane ethylene oxide.

An adhesive optical component of the present invention includes an optical component and an adhesive layer provided on one surface or both surfaces of the optical component, the adhesive layer being composed of the above radiation-curable adhesive composition for an optical component.

The optical component is preferably an optical film selected from the group consisting of a polarizing film, a retardation film, an elliptically polarizing film, an antireflection film, a luminance-improving film, a light diffusion film, and an optical compensation film.

Advantageous Effects of Invention

A radiation-curable adhesive composition for an optical component of the present invention can exhibit a high tensile strength and flexibility suitable for enabling stable adhesion between the optical component and an adherend when light-cured, and can exhibit excellent durability even under high-temperature conditions and high-temperature and high-humidity conditions. Furthermore, when the radiation-curable adhesive composition for an optical component of the present invention is used for bonding a liquid crystal cell to an optical component, occurrence of a problem such as light leakage can be suppressed.

Description of Embodiments

A radiation-curable adhesive composition for an optical component according to the present invention contains
100 parts by weight of a specific (meth)acrylic copolymer (A),
2 to 20 parts by weight of a specific radiation-curable acrylic compound (B),
3 to 50 parts by weight of a specific radiation-curable acrylic compound (C),
0.1 to 10 parts by weight of a hydrogen abstraction-type photopolymerization initiator (D),
0.01 to 10 parts by weight of an isocyanate crosslinking agent (E) having two or more isocyanate groups in its molecule, and
0.01 to 3 parts by weight of a silane compound (F) having an organic functional group having reactivity with a carboxyl group,
in which the total amount of the amount of radiation-curable acrylic compound (B) mixed and the amount of radiation-curable acrylic compound (C) mixed is 5 to 60 parts by weight.

In order to improve various physical properties of the adhesive composition of the present invention, the adhesive composition may optionally contain other components.

The present invention will now be described specifically. For the sake of convenience, the (meth)acrylic copolymer (A), the radiation-curable acrylic compound (B), the radiation-curable acrylic compound (C), the hydrogen abstraction-type photopolymerization initiator (D), the isocyanate crosslinking agent (E), and the silane compound (F) mentioned above may be referred to as "component (A)", "component (B)", "component (C)", "component (D)", "component (E)", and "component (F)", respectively.

The (meth)acrylic copolymer A (component (A)) used in the radiation-curable adhesive composition for an optical component of the present invention includes components (a1) to (a3) below serving as monomer components, has a glass transition temperature of -20°C or lower, and a weight-average molecular weight of 500,000 to 2,000,000. Alkyl (meth)acrylate monomer (a1) 80% to 99.8% by mass Carboxyl-group-containing (meth)acrylic monomer (a2) 0.1%

to 10% by mass
Hydroxyl-group-containing (meth)acrylic monomer (a3) 0.1% to 10% by mass
(In the component (A), the total amount of (a1) to (a3) is 100% by mass.)
The alkyl (meth)acrylate monomer (a1) is not particularly limited as long as the monomer is an alkyl methacrylate and/or an alkyl acrylate. Examples thereof include alkyl (linear or branched alkyl) (meth)acrylates such as methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl(meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth) acrylate, heptadecyl (meth)acrylate, and octadecyl (meth)acrylate. These may be used alone or in combination.

The carboxyl-group-containing (meth)acrylic monomer (a2) is not particularly limited as long as the monomer is a (meth)acrylic monomer having a carboxyl group. Examples thereof include addition polymerizable unsaturated aliphatic monocarboxylic acids such as (meth)acrylic acid, α-ethylacrylic acid, crotonic acid, α-methylcrotonic acid, α-ethylcrotonic acid, isocrotonic acid, tiglic acid, and angelic acid; and addition polymerizable unsaturated aliphatic dicarboxylic acids such as maleic acid, fumaric acid, itaconic acid, citraconic acid, mesaconic acid, glutaconic acid, and dihydromuconic acid. These may be used alone or in combination.

The hydroxyl-group-containing (meth)acrylic monomer (a3) is not particularly limited as long as the monomer is a (meth)acrylic monomer having a hydroxyl group. Examples thereof include 2-hydroxyethyl (meth)acrylate, 2-hydroxypropyl (meth)acrylate, 6-hydroxyhexyl (meth)acrylate, 4-hydroxybutyl (meth)acrylate, and mono(meth)acrylates of an alkylene diol, e.g., polypropylene glycol mono(meth)acrylate and 1,6-hexanediol mono(meth)acrylate; and (meth)acrylamides such as N-hydroxyethyl (meth)acrylamide and N-hydroxypropyl (meth)acrylamide. These may be used alone or in combination. Among these, 4-hydroxybutyl (meth)acrylate and 2-hydroxyethyl (meth)acrylate are preferable.

With regard to the amounts of components (a1) to (a3) in the component (A), when the total amount of (a1) to (a3) is assumed to be 100% by mass, the amount of (a1) is 80% to 99.8% by mass, the amount of (a2) is 0.1% to 10% by mass, and the amount of (a3) is 0.1% to 10% by mass; preferably, the amount of (a1) is 84% to 99.8% by mass, the amount of (a2) is 0.1% to 8% by mass, and the amount of (a3) is 0.1% to 8% by mass; and more preferably, the amount of (a1) is 90% to 99.8% by mass, the amount of (a2) is 0.1% to 5% by mass, and the amount of (a3) is 0.1% to 5% by mass. By controlling the amounts of components (a1) to (a3) to be the above ratio, excellent durability can be imparted without impairing other physical properties such as removability.

Note that (A) may optionally contain another monomer (a4) in addition to the components (a1) to (a3). Examples of the other monomer (a4) include alkoxyalkyl (meth)acrylates such as methoxyethyl (meth)acrylate and ethoxyethyl (meth)acrylate; epoxy-group-containing (meth)acrylates such as glycidyl (meth)acrylate; acetoacetyl-group-containing (meth)acrylates such as acetoacetoxyethyl (meth)acrylate; aromatic monomers such as styrene, methylstyrene, and vinyltoluene; methacryloxypropylmethoxysilane; vinyl acetate; vinyl chloride; and (meth)acrylonitrile. The mixing ratio of the other monomer is preferably 0.1 to 10 parts by weight, and more preferably 0.1 to 5 parts by weight based on 100 parts by weight of the alkyl acrylate monomer of the component (a1).

Furthermore, the weight-average molecular weight (Mw) of the (meth)acrylic copolymer (A) measured by gel permeation chromatography (GPC) is 500,000 to 2,000,000, and preferably 500,000 to 1,800,000.

When the weight-average molecular weight (Mw) of the (meth)acrylic copolymer (A) measured by gel permeation chromatography (GPC) is within the above range, it is possible to exhibit a sufficient cohesive force even under high-temperature conditions and to suppress the generation of foam. In addition, a moderate stress-relieving property (flexibility) of the adhesive does not decrease, and for example, when the adhesive is used for bonding a glass substrate to a polarizing plate, occurrence of a light leakage phenomenon in a peripheral end portion of the bonded surface can be suppressed.

The glass transition temperature (Tg) of the (meth)acrylic copolymer (A) is -20°C or lower, preferably -80°C to -30°C, and more preferably -70°C to -50°C. By specifying the Tg of the component (A) within this range, when an adhesive optical component including an adhesive layer composed of the adhesive composition of the present invention is bonded to an adherend, adhesiveness to the adherend can be made to be uniform. Note that the glass transition temperature (Tg) is calculated by the Fox equation.

A method for polymerizing the (meth)acrylic copolymer (A) used in the present invention is not particularly limited. The (meth)acrylic copolymer (A) can be polymerized by a known method such as solution polymerization, emulsion polymerization, or suspension polymerization. However, the (meth)acrylic copolymer (A) is preferably polymerized by solution polymerization because when the radiation-curable adhesive composition for an optical component of the present invention is produced by using a mixture containing a copolymer obtained by polymerization, the treatment process can be relatively easily performed in a short time.

In general, solution polymerization is conducted by charging a specific organic solvent, a monomer, a polymerization initiator, and, as required, a chain transfer agent in a polymerization tank, and causing a reaction by heating

for several hours while stirring in a nitrogen stream or at a reflux temperature of the organic solvent.

In this case, at least a portion of the organic solvent, the monomer, and/or the polymerization initiator may be sequentially added.

Examples of the organic solvent for polymerization include aromatic hydrocarbons such as benzene, toluene, ethylbenzene, n-propylbenzene, tert-butylbenzene, o-xylene, m-xylene, p-xylene, tetralin, decalin, and aromatic naphtha; aliphatic or alicyclic hydrocarbons such as n-hexane, n-heptane, n-octane, isooctane, n-decane, dipentene, petroleum spirit, petroleum naphtha, and turpentine oil; esters such as ethyl acetate, n-butyl acetate, n-amyl acetate, 2-hydroxyethyl acetate, 2-butoxyethyl acetate, 3-methoxybutyl acetate, and methyl benzoate; ketones such as acetone, methyl ethyl ketone, methyl isobutyl ketone, isophorone, cyclohexanone, and methylcyclohexanone; glycol ethers such as ethylene glycol monomethyl ether, ethylene glycol monoethyl ether, ethylene glycol monobutyl ether, diethylene glycol monomethyl ether, diethylene glycol monoethyl ether, and diethylene glycol monobutyl ether; and alcohols such as methyl alcohol, ethyl alcohol, n-propyl alcohol, isopropyl alcohol, n-butyl alcohol, isobutyl alcohol, sec-butyl alcohol, and tert-butyl alcohol. These organic solvents may be used alone or as a mixture of two or more types of the solvents.

Among these organic solvents for polymerization, in polymerization of the (meth)acrylic copolymer (A), organic solvents that do not easily cause chain transfer during the polymerization reaction, for example, esters and ketones are preferably used. In particular, from the standpoint of solubility of the (meth)acrylic copolymer (A), the ease of the polymerization reaction, etc., the use of ethyl acetate, methyl ethyl ketone, acetone, or the like is preferable.

As the polymerization initiator, organic peroxides, azo compounds, and the like that can be used in normal solution polymerization can be used.

Examples of the organic peroxides include tert-butyl hydroperoxide, cumene hydroxide, dicumyl peroxide, benzoyl peroxide, lauroyl peroxide, caproyl peroxide, di-isopropyl peroxydicarbonate, di-2-ethylhexyl peroxydicarbonate, tert-butyl peroxypivalate, 2,2-bis(4,4-di-tert-butylperoxy cyclohexyl)propane, 2,2-bis(4,4-di-tert-amylperoxy cyclohexyl) propane, 2,2-bis(4,4-di-tert-octylperoxy cyclohexyl)propane, 2,2-bis(4,4-di-α-cumylperoxy cyclohexyl)propane, 2,2-bis (4,4-di-tert-butylperoxy cyclohexyl)butane, and 2,2-bis(4,4-di-tert-octylperoxy cyclohexyl)butane. Examples of the azo compounds include 2,2'-azobisisobutyronitrile, 2,2'-azobis-2,4-dimethylvaleronitrile, and 2,2'-azobis-4-methoxy-2,4-dimethylvaleronitrile.

Among these organic peroxides, in polymerization of the (meth)acrylic copolymer (A), polymerization initiators that do not cause a graft reaction during the polymerization reaction are preferable, and azo compounds are particularly preferable. The amount of polymerization initiator used is usually 0.01 to 2 parts by weight, and preferably 0.1 to 1.0 part by weight based on 100 parts by weight of the total of the monomers.

In producing the (meth)acrylic copolymer (A) used in the present invention, a chain transfer agent is not usually used, but may be used as required so long as the object and advantages of the present invention are not impaired.

Examples of the chain transfer agent include cyanoacetic acid; alkyl esters of cyanoacetic acid, the alkyl esters having 1 to 8 carbon atoms; bromoacetic acid; alkyl esters of bromoacetic acid, the alkyl esters having 1 to 8 carbon atoms; aromatic compounds such as anthracene, phenanthrene, fluorene, and 9-phenylfluorene; aromatic nitro compounds such as p-nitroaniline, nitrobenzene, dinitrobenzene, p-nitrobenzoic acid, p-nitrophenol, and p-nitrotoluene; benzoquinone derivatives such as benzoquinone and 2,3,5,6-tetramethyl-p-benzoquinone; borane derivatives such as tributylborane; halogenated hydrocarbons such as carbon tetrabromide, carbon tetrachloride, 1,1,2,2-tetrabromoethane, tribromoethylene, trichloroethylene, bromotrichloromethane, tribromomethane, and 3-chloro-1-propene; aldehydes such as chloral and furaldehyde; alkylmercaptans having 1 to 18 carbon atoms; aromatic mercaptans such as thiophenol and toluene mercaptan; mercaptoacetic acid and alkyl esters of mercaptoacetic acid, the alkyl esters having 1 to 10 carbon atoms; hydroxyalkyl mercaptans having 1 to 12 carbon atoms; terpenes such as pinene and terpinolene.

The polymerization temperature is usually in the range of about 30°C to 180°C, preferably 40°C to 150°C, and more preferably 50°C to 90°C.

Note that, in the case where unreacted monomers are contained in a polymer obtained by a solution polymerization method or the like, the polymer can be purified by a reprecipitation method with methanol or the like to remove the monomers.

The radiation-curable adhesive composition for an optical component of the present invention contains 2 to 20 parts by weight of a radiation-curable acrylic compound (B) and 3 to 50 parts by weight of a radiation-curable acrylic compound (C) based on 100 parts by weight of the component (A). The component (B), the component (C), and a hydrogen abstraction-type photopolymerization initiator (D) described below generate crosslinking between the component (A) and the component (B) or the component (C), or between the component (B) and the component (C) by a radical chain reaction when the radiation-curable adhesive composition for an optical component of the present invention is irradiated with radiation such as ultraviolet (UV) rays. As a result, a three-dimensional polymer structure having a very high crosslinking density is formed from the radiation-curable adhesive composition for an optical component. Such a three-dimensional polymer structure has a satisfactory tensile strength even under high-temperature conditions or high-temperature and high-humidity conditions, and thus can contribute to exhibit excellent durability.

The radiation-curable acrylic compound (B) is not particularly limited as long as the compound is a radiation-curable (meth)acrylic compound having two (meth)acryloyl groups in its molecule, but is preferably a radiation-curable acrylic compound represented by general formula (3) below.

[Chem. 6]

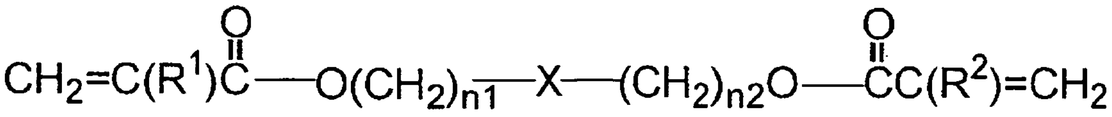 (3)

(n1 and n2 each independently represent an integer of 0 to 10. $R^1$ and $R^2$ each independently represent a hydrogen atom or a methyl group.

X represents a linear or branched divalent alkyl group having 1 to 20 carbon atoms, a linear or branched divalent cycloalkyl group having 3 to 20 carbon atoms, an alkoxyl group represented by general formula (4) below, or a diphenylalkyl group represented by general formula (5) below.)

[Chem. 7]

$$-(OC_nH_{2n})_m- \quad (4)$$

(n represents an integer of 1 to 20, and m represents an integer of 1 to 10.)

[Chem. 8] **$-Ar-C_nH_{2n}-Ar-$** (5)

(n represents an integer of 1 to 20, and Ar represents an aryl group which may have a substituent.)

When X in the above general formula is a linear or branched divalent alkyl group having 1 to 20 carbon atoms, the number of carbon atoms of the alkyl group is preferably 1 to 16, and more preferably 1 to 12. The alkyl group may be either a linear group or a branched group.

Specific examples of the radiation-curable acrylic compound (B) include neopentyl glycol diacrylate represented by structural formula (6) below and 1,9-nonanediol diacrylate represented by structural formula (7) below.

[Chem. 9]

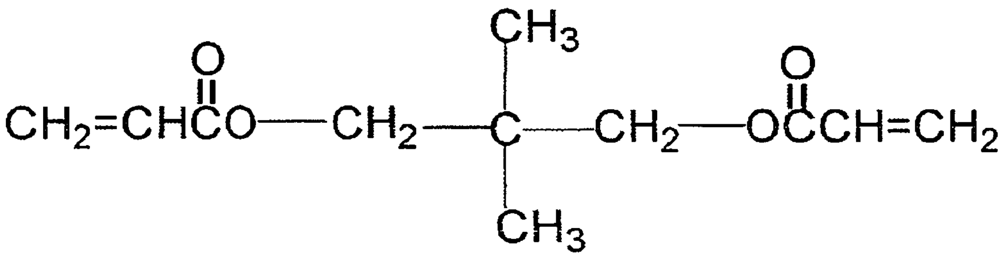

(6)

[Chem. 10]

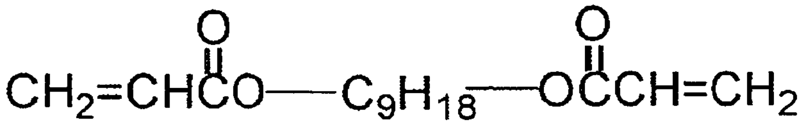

(7)

When X in general formula (3) above is a linear or branched divalent cycloalkyl group having 3 to 20 carbon atoms, the number of carbon atoms of the alkyl group is preferably 3 to 18, and more preferably 3 to 14. The cycloalkyl group may be either a linear group or a branched group.

A specific example of the radiation-curable acrylic compound (B) is dimethylol tricyclodecane diacrylate represented by structural formula (8) below.

[Chem. 11]

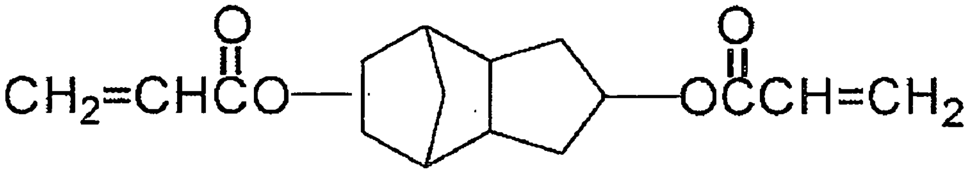

(8)

When X in general formula (3) above is an alkoxyl group represented by general formula (4) above, n in the alkoxyl group preferably represents an integer of 1 to 14, more preferably an integer of 1 to 10, and m preferably represents an integer of 1 to 8, more preferably an integer of 1 to 6.

Specifically, examples of the radiation-curable acrylic compound (B) include polypropylene glycol diacrylate represented by structural formula (9) below and polyethylene glycol diacrylate represented by structural formula (10) below.

[Chem. 12]

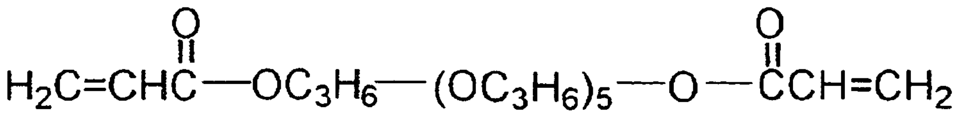

(9)

[Chem. 13]

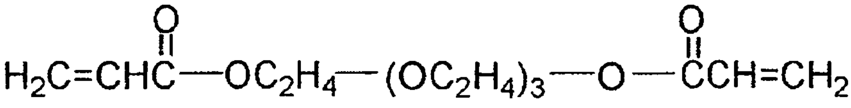

(10)

When X in general formula (3) above is a diphenylalkyl group represented by general formula (5) above, n in the diphenylalkyl group is preferably 1 to 12, and more preferably 1 to 6.

Specifically, examples of the radiation-curable acrylic compound (B) include bisphenol A polyethylene glycol diacrylate represented by structural formula (11) below and α-phenyl-ω-acryloyloxypolyoxyethylene-formaldehyde polycondensate represented by structural formula (12) below. These compounds may be used alone or in combination.

[Chem. 14]

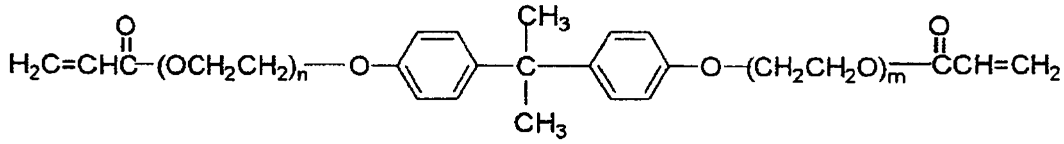

(1 1)

(m + n = 4)
[Chem. 15]

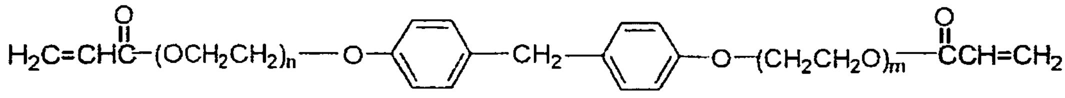

(1 2)

(m + n = 4)
The amount of component (B) mixed in the radiation-curable adhesive composition for an optical component of the present invention is 2 to 20 parts by weight, preferably 2 to 18 parts by weight, and more preferably 2 to 16 parts by weight based on 100 parts by weight of the component (A).
The radiation-curable acrylic compound (C) is represented by general formula (1) or (2) below.
[Chem. 16]

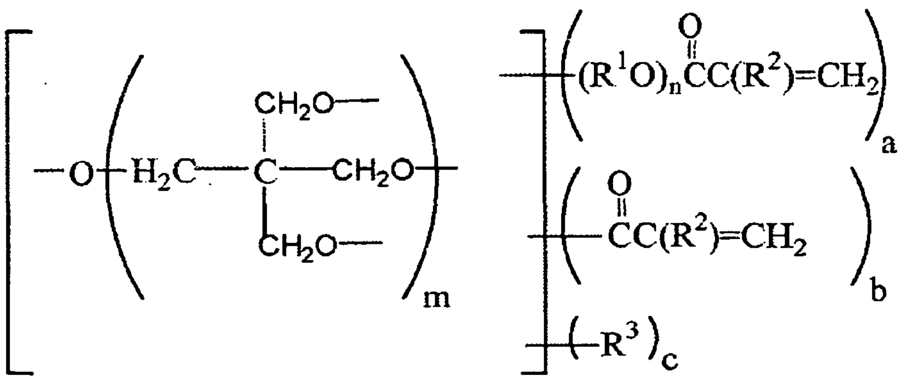

(1)

(m is an integer of 1 to 5.
a is an integer of 1 or more, b is an integer of 0 or more, c is an integer of 0 or more, the sum of a and b is 3 to 10, and the condition a + b + c = 2m + 2 is satisfied. n is an integer of 2 to 6.
$R^1$ represents an alkyl group which may have a substituent and which has 2 to 4 carbon atoms.
$R^2$ represents hydrogen or a methyl group.
$R^3$ represents a hydrogen atom, a hydrocarbon group which may have a substituent, an oxygen-containing functional group which may have a substituent, or a nitrogen-containing functional group which may have a substituent.)
[Chem. 17]

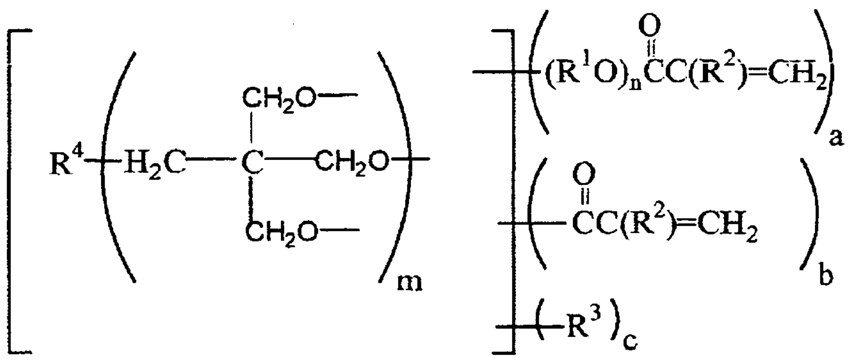

(2)

(m is an integer of 1 to 5.
a is an integer of 1 or more, b is an integer of 0 or more, c is an integer of 0 or more, the sum of a and b is 3 to 10, and the condition a + b + c = 2m + 1 is satisfied.
n is an integer of 2 to 6.
$R^1$ represents an alkyl group which may have a substituent and which has 2 to 4 carbon atoms.
$R^2$ represents hydrogen or a methyl group.
$R^3$ and $R^4$ each independently represent a hydrogen atom, a hydrocarbon group which may have a substituent, an oxygen-containing functional group which may have a substituent, or a nitrogen-containing functional group which may have a substituent.)
In $R^3$ in general formula (1) above and $R^3$ and $R^4$ in general formula (2) above, the hydrocarbon group is not particularly limited as long as the hydrocarbon group is a functional group consisting of carbon atoms and hydrogen atoms. Examples thereof include aliphatic hydrocarbon groups such as alkyl groups, alkenyl groups, and alkynyl groups; alicyclic hydrocarbon groups such as cycloalkyl groups, cycloalkenyl groups, and cycloalkynyl groups; and aromatic hydrocarbon groups such as a phenyl group, a naphthyl group, an anthryl group, and a phenanthryl group.

In $R^3$ in general formula (1) above and $R^3$ and $R^4$ in general formula (2) above, the oxygen-containing functional group is not particularly limited as long as the functional group contains an oxygen atom. Specific examples thereof include a carboxyl group, a hydroxyl group, an alcohol group, a carbonyl group, a quinone group, a lactone group, an epoxy group, a ketone group, acrylic acid, a nitro group, a sulfone group, and phosphoric acid. Examples thereof further include anhydrides obtained by condensation of compounds having any of these groups, and esterified products and alkali salts of such compounds.

In $R^3$ in general formula (1) above and $R^3$ and $R^4$ in general formula (2) above, the nitrogen-containing functional group is not particularly limited as long as the functional group contains a nitrogen atom. Examples thereof include an amino group, an amide group, an imino group, an imidazole group, a nitrile group, and a pyridyl group.

The radiation-curable acrylic compound (C) is not particularly limited as long as the compound (C) is a compound represented by general formula (1) or (2) above. Examples of the radiation-curable acrylic compound (C) include acrylic acid ester of dipentaerythritol caprolactone represented by structural formula (13) below, acrylic acid ester of pentaerythritol ethylene oxide represented by structural formula (14) below, and acrylic acid ester of trimethylolpropane ethylene oxide represented by structural formula (15) below.

[Chem. 18]

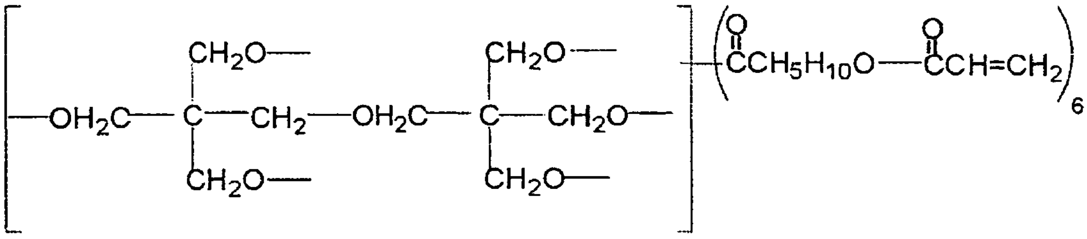

(1 3)

[Chem. 19]

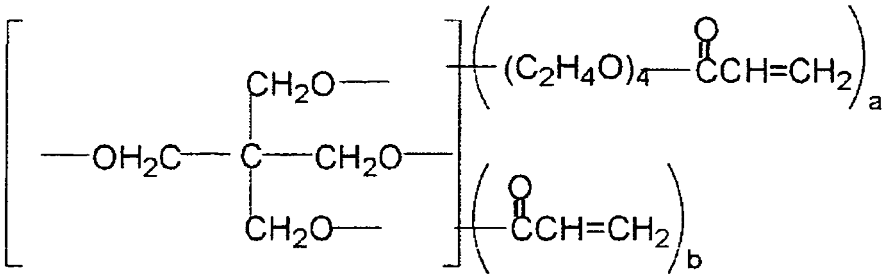

(1 4)

(a is an integer of 1 to 4, and the condition a + b = 4 is satisfied.)

[Chem. 20]

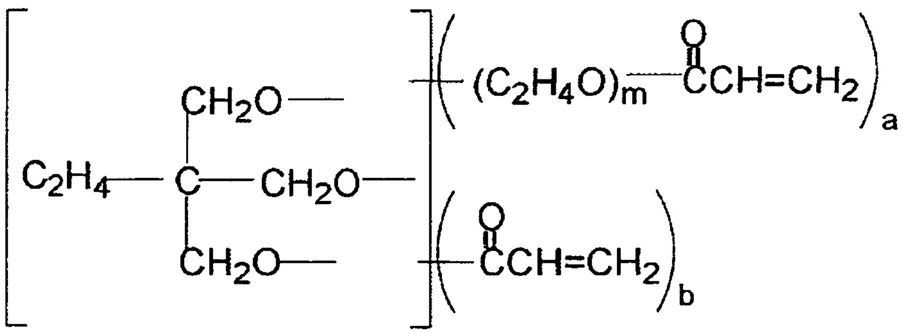

(1 5)

(m = 1, a = 3, b = 0, or m = 3, a = 1, b = 2)

The amount of component (C) mixed in the radiation-curable adhesive composition for an optical component of the present invention is 3 to 50 parts by weight, preferably 3 to 40 parts by weight, and more preferably 3 to 30 parts by weight based on 100 parts by weight of the component (A).

The total amount of component (B) and component (C) in the radiation-curable adhesive composition for an optical component of the present invention is 5 to 60 parts by weight, preferably 5 to 50 parts by weight, and more preferably 5 to 40 parts by weight based on 100 parts by weight of the component (A). By controlling the total amount in this range, it is possible to impart a high tensile strength necessary for improving durability, and moderate flexibility necessary for maintaining stable adhesion between an optical component and an adherend.

In addition, the amount of component (C) mixed in the radiation-curable adhesive composition for an optical component of the present invention is preferably larger than the amount of component (B) mixed therein. Furthermore, a quantitative ratio of the amount of component (C) mixed to the amount of component (B) mixed (the amount of component (C) mixed/the amount of component (B) mixed) is preferably 1.5 to 30, and more preferably 1.5 to 20. By controlling the quantitative ratio of the amount of component (C) mixed to the amount of component (B) mixed (the amount of component (C) mixed/the amount of component (B) mixed) in this range, it is possible to impart a high tensile strength necessary for improving durability, and moderate flexibility necessary for maintaining stable adhesion between an optical component and an adherend.

The radiation-curable adhesive composition for an optical component of the present invention contains 0.1 to 10 parts by weight of the hydrogen abstraction-type photopolymerization initiator (D) based on 100 parts by weight of the component (A) for the purpose of curing the adhesive composition by radiation such as ultraviolet rays.

Examples of the component (D) include acetophenones such as acetophenone, methoxyacetophenone, 2,2-diethoxyacetophenone, p-dimethylaminoacetophenone, 2,2-dimethoxy-2-phenylacetophenone, α-hydroxy-α,α'-dimethylacetophenone, 2-hydroxy-2-cyclohexylacetophenone, and 2-methyl-1-[4-(methylthio)phenyl]-2-morpholinopropanone-1; benzoin; benzoin ethers such as benzoin methyl ether, benzoin ethyl ether, and benzoin isopropyl butyl ether; ketones such as benzophenone, 2-chlorobenzophenone, p,p'-dichlorobenzophenone, N,N'-tetramethyl-4,4'-diaminobenzophenone, and 4-(2-hydroxyethoxy)phenyl(2-hydroxy-2-propyl)ketone; thioxanthones such as thioxanthone, 2-chlorothioxanthone, and 2-methylthioxanthone; phosphine oxides such as bisacylphosphine oxide and benzoylphosphine oxide;

ketals such as benzyl dimethyl ketal; and quinones such as camphane-2,3-dione and phenanthrenequinone. These may be used alone or in combination.

The amount of component (D) mixed in the radiation-curable adhesive composition for an optical component of the present invention is 0.1 to 10 parts by weight, preferably 0.1 to 8 parts by weight, and more preferably 0.1 to 6 parts by weight based on 100 parts by weight of the component (A).

The radiation-curable adhesive composition for an optical component of the present invention contains 0.01 to 10 parts by weight of an isocyanate crosslinking agent (E) having two or more isocyanate groups in its molecule.

The isocyanate crosslinking agent (E) is not particularly limited as long as the crosslinking agent (E) is an isocyanate crosslinking agent having, in its molecule, two or more isocyanate groups, which can be crosslinked with hydroxyl groups of the (meth)acrylic copolymer (A) at room temperature or under heating. Examples thereof include isocyanate monomers such as tolylene diisocyanate, chlorophenylene diisocyanate, hexamethylene diisocyanate, tetramethylene diisocyanate, isophorone diisocyanate, diphenylmethane diisocyanate, and hydrogenated diphenylmethane diisocyanate; and isocyanate compounds and isocyanurate compounds obtained by adding any of these compounds to a divalent or higher-valent alcohol compound such as trimethylolpropane.

Examples thereof further include urethane prepolymer isocyanates obtained by an addition reaction between an isocyanate compound and a known polyether polyol, polyester polyol, acrylic polyol, polybutadiene polyol, polyisoprene polyol, or the like.

The amount of component (E) mixed in the radiation-curable adhesive composition for an optical component of the present invention is 0.1 to 10 parts by weight, preferably 0.1 to 8 parts by weight, and more preferably 0.1 to 6 parts by weight based on 100 parts by weight of the component (A). When the component (E) is contained within this range, the gel fraction after the crosslinking of the adhesive composition can be easily controlled.

The radiation-curable adhesive composition for an optical component of the present invention contains 0.01 to 3 parts by weight of a silane compound (F) having an organic functional group having reactivity with a carboxyl group based on 100 parts by weight of the component (A). Examples of the organic functional group that can react (couple) with a carboxyl group in the molecule of the (meth)acrylic copolymer (A) include an epoxy group, an amino group, a vinyl group, and an oxazoline group.

Specific examples of the component (F) include vinyltrimethoxysilane, vinyltriethoxysilane, β-(3,4-epoxycyclohexyl)ethyltrimethoxysilane, γ-glycidoxypropyltrimethoxysilane, γ-glycidoxypropyltrimethoxysilane, and γ-glycidoxypropylmethyldiethoxysilane.

The amount of component (F) mixed in the radiation-curable adhesive composition for an optical component of the present invention is 0.01 to 3 parts by weight, preferably 0.01 to 2 parts by weight, and more preferably 0.01 to 1.5 parts by weight based on 100 parts by weight of the component (A). When the component (F) is contained within this range, the gel fraction after the crosslinking of the adhesive composition can be easily controlled.

The gel fraction of the radiation-curable adhesive composition for an optical component of the present invention is preferably 80% to 99%. A gel fraction in the above range can impart a high tensile strength necessary for improving durability.

The above-mentioned gel fraction can be determined as follows. First, 0.1 g of an adhesive composition is placed in a sample bottle, 30 cc of ethyl acetate is added thereto, and the sample bottle is shaken for 24 hours. The content in the sample bottle is then filtered with a 200-mesh stainless steel screen, and the residue on the screen is dried at 100°C for two hours, and a dry weight thereof is measured. The gel fraction is determined by formula [I] below.

$$\text{Gel fraction (\%)} = (\text{dry weight}/\text{weight of placed adhesive}) \times 100 \cdots [I]$$

An adhesive optical component according to the present invention includes an optical component and an adhesive layer provided on one surface or both surfaces of the optical component, the adhesive layer being composed of the above-described radiation-curable adhesive composition for an optical component.

Herein, the optical component is used in various image display devices such as a liquid crystal display, a plasma display, and an organic EL display. Examples of the optical component include optical films such as a polarizing film, a retardation film, a luminance-improving film, a hard coat film, an elliptically polarizing film, an antireflection film, a light diffusion film, an anti-glare film, an antistatic film, and an optical compensation film; and optical plates such as a polarizing plate, a retardation plate, a luminance-improving plate, an elliptically polarizing plate, an antireflection plate, a light diffusion plate, an anti-glare plate, an antistatic plate, and an optical compensation plate.

The adhesive optical component may be produced by applying the radiation-curable adhesive composition for an optical component onto one surface or both surfaces of an optical component by a gravure coater, a Mayer bar coater, an air knife coater, a roll coater, or the like, exposing the adhesive composition applied onto the optical component to

radiation, drying and crosslinking the adhesive composition at room temperature or by heating. Alternatively, the adhesive optical component may be produced by forming an adhesive layer on a release film, transferring this adhesive layer to the optical component, and then performing radiation irradiation, drying, and crosslinking.

Herein, examples of the radiation include ultraviolet rays, laser beams, alpha rays, beta rays, gamma rays, X rays, and electron beams. From the standpoint of good controllability and handleability, and the cost, ultraviolet rays are preferably used. Examples of a light source of the ultraviolet rays include a high-pressure mercury vapor lamp, a microwave-excited lamp, and a chemical lamp.

The irradiation time of the ultraviolet rays varies depending on the thickness of the adhesive composition applied, but is usually 10 seconds to 5 minutes, and preferably 30 seconds to 3 minutes.

Before the use of the adhesive optical component, a release film may be stacked on the upper surface of the adhesive layer in order to protect the adhesive layer.

The thickness of the adhesive layer is not particularly limited, but is usually 1 to 500 μm, and preferably about 5 to 300 μm.

[EXAMPLES]

The present invention will be described more specifically by way of Examples, but the present invention is not limited to the Examples.

(1) Raw materials of radiation-curable adhesive composition for optical component

Components contained in radiation-curable adhesive compositions for an optical component (hereinafter, simply referred to as "adhesive composition") used in adhesive polarizing films of Examples and Comparative Examples are as follows, and component ratios thereof are shown in Table 1. Note that numerical values in the table represent parts by weight on a solid content (non-volatile content) basis.

(A) Monomer components constituting acrylic polymer A
(A-1) n-Butyl acrylate (BA)
(A-2) Acrylic acid (AA)
(A-3) 2-Hydroxyethyl acrylate (HEA)
(B-1) α-Phenyl-ω-acryloyloxypolyoxyethylene-formaldehyde polycondensate (KAYARAD R-712; manufactured by Nippon Kayaku Co., Ltd.)

[Chem. 21]

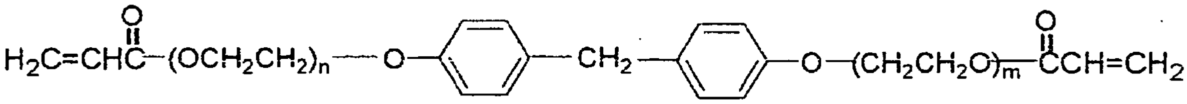

(m + n = 4)
(B-2) Neopentyl glycol diacrylate (KAYARAD NPGDA; manufactured by Nippon Kayaku Co., Ltd.)

[Chem. 22]

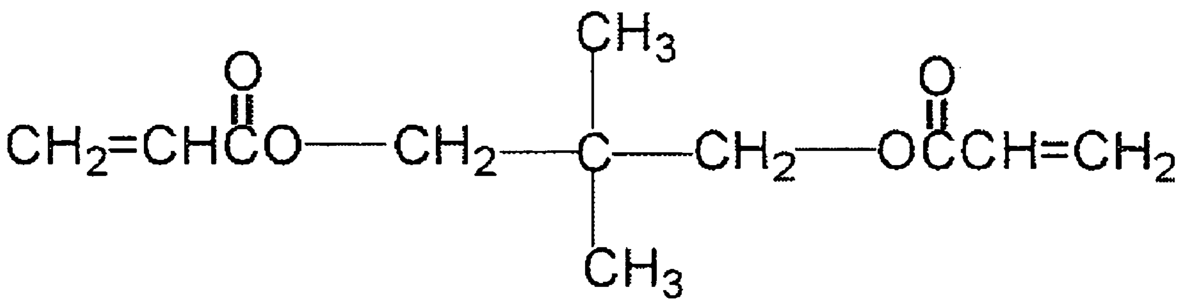

(B-3) Polypropylene glycol diacrylate (APG-700; manufactured by Shin-Nakamura Chemical Co., Ltd.

[Chem. 23]

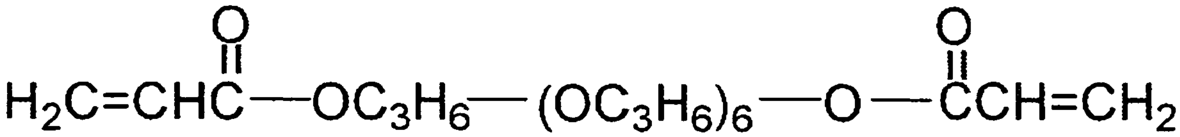

(C-1) Acrylic acid ester of dipentaerythritol caprolactone (KAYARAD DPCA-60; manufactured by Nippon Kayaku Co., Ltd.)

[Chem. 24]

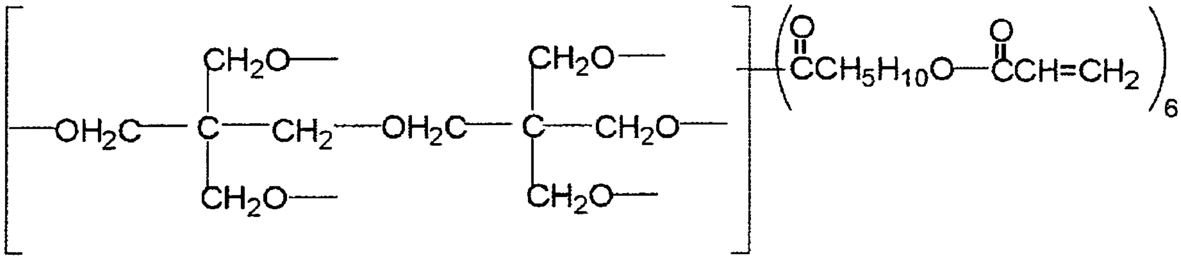

(C-2) Acrylic acid ester of pentaerythritol ethylene oxide (KAYARAD RP-1040; manufactured by Nippon Kayaku Co., Ltd.)

[Chem. 25]

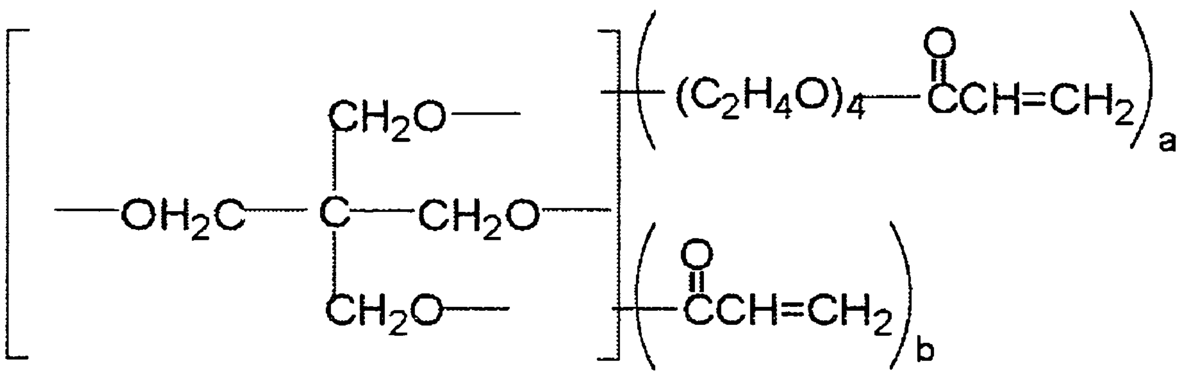

(a is an integer of 1 to 4, and the condition a + b = 4 is satisfied.)

(C-3) Acrylic acid ester of trimethylolpropane ethylene oxide (KAYARAD THE-330; manufactured by Nippon Kayaku Co., Ltd.)

[Chem. 26]

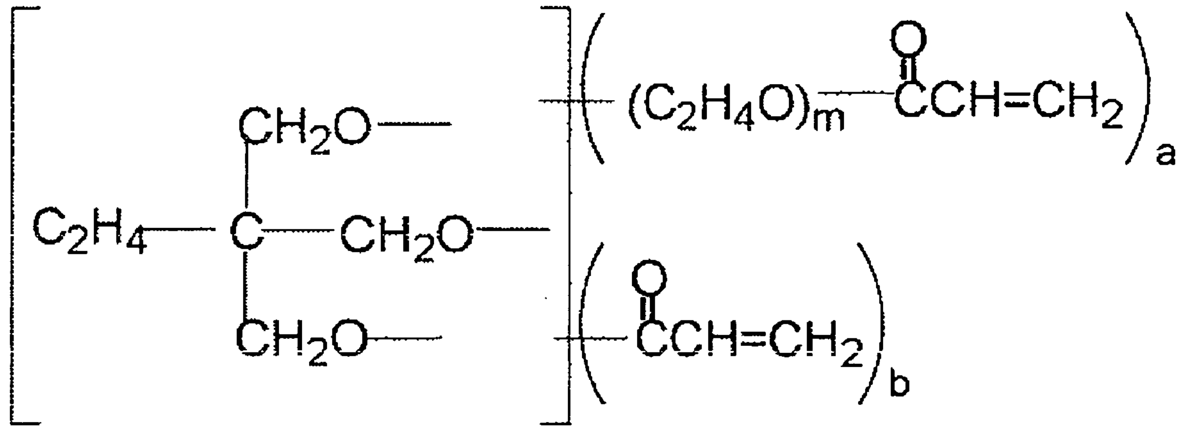

(m = 1, a = 3, b = 0, or m = 3, a = 1, b = 2)
(C-4) Dipentaerythritol hexaacrylate (KAYARAD DPHA; manufactured by Nippon Kayaku Co., Ltd.)
[Chem. 27]

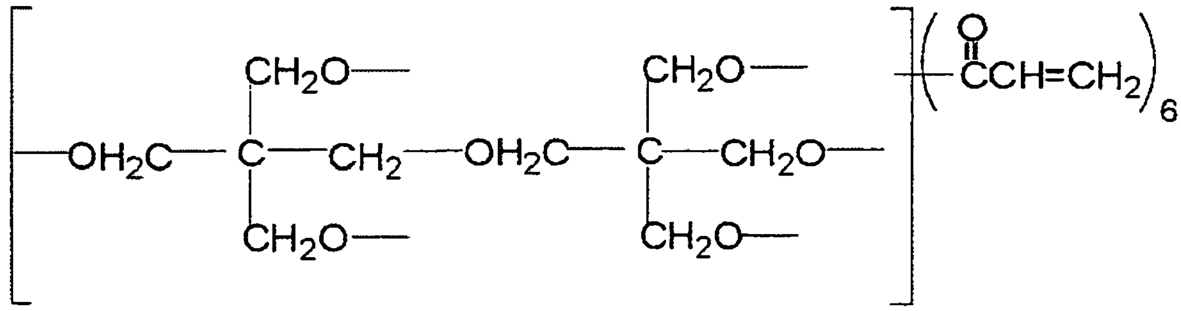

(D-1) IRGACURE 500 (1-hydroxy-cyclohexyl-phenyl ketone:benzophenone = 1:1 (hydrogen abstraction-type photopolymerization initiator); manufactured by Ciba Japan K.K.)
(D-2) IRGACURE 819 (bis(2,4,6-trimethylbenzoyl)-phenylphosphine oxide (non-hydrogen abstraction-type photopolymerization initiator); manufactured by Ciba Japan K.K.)
(E) CORONATE L (polyisocyanate compound; manufactured by Nippon Polyurethane Industry Co., Ltd.)
(F) KBM-403 (γ-glycidoxypropyltrimethoxysilane; manufactured by Shin-Etsu Chemical Co., Ltd.)

(2) Production of acrylic polymer solution A

First, 281.4 parts by weight of butyl acrylate (BA), 18 parts by weight of acrylic acid (AA), 0.6 parts by weight of 2-hydroxyethyl acrylate (2-HEA), and 300 parts by weight of ethyl acetate were charged in a reaction vessel equipped with a stirrer, a reflux condenser, a thermometer, and a nitrogen-introducing tube. Furthermore, 0.1 parts by weight of azobisisobutyronitrile (AIBN) was added to the reaction vessel, and air in this reaction vessel was replaced with nitrogen gas.
Next, the temperature of this reaction vessel was increased to 60°C while stirring in a nitrogen atmosphere, and the reaction mixture was allowed to react for four hours. After the completion of the reaction, the reaction mixture was diluted with ethyl acetate to obtain an acrylic polymer solution A (acrylic polymer concentration: 40% by mass). An acrylic polymer contained in the acrylic polymer solution A had a weight-average molecular weight of 1,500,000, and a glass transition temperature of -33°C.

(3) Examples and Comparative Examples

[EXAMPLE 1]

As shown in Table 1, 10 parts by weight of KAYARAD R-712, 20 parts by weight of KAYARAD DPCA-60, 4 parts by weight of IRGACURE 500, 0.5 parts by weight of CORONATE L, and 0.4 parts by weight of KBM-403 were added to 100 parts by weight of the acrylic polymer contained in the acrylic polymer solution A, and these components were mixed to obtain an adhesive composition 1.

The prepared adhesive composition 1 was applied onto a polyester film (PET3811 manufactured by Lintec Corporation), which has been subjected to a release treatment, to form an adhesive layer. The polyester film was further dried at 80°C for two minutes in a drying oven to obtain an adhesive sheet 1 including the adhesive layer having a thickness of 25 μm after drying.

The prepared adhesive sheet 1 was bonded to one surface of a polarizing film (composed of polyvinyl alcohol). Ultraviolet irradiation was conducted from the adhesive layer side of the adhesive sheet 1 using a UV irradiation device (light source: high-pressure mercury vapor lamp) with a conveyor at a lamp output of 160 W and at an irradiation distance of 10 cm while adjusting the conveyor speed so that the integrated amount of light was 200 mJ/cm $^2$ After the UV irradiation, the polarizing film onto which the adhesive sheet 1 was bonded was aged in a dark place at 23°C and at a humidity of 50% RH (relative humidity) for seven days. Thus, an adhesive polarizing film 1 was prepared.

Next, physical properties of the adhesive polarizing film 1 were evaluated in accordance with "(4) Evaluation conditions and criteria for physical property evaluation" described below. The results are shown in Table 2.

[EXAMPLE 2]

An adhesive composition 2 and an adhesive polarizing film 2 were prepared as in Example 1 except that KAYARAD R-712 was changed to KAYARAD NPGDA. The physical properties of the prepared adhesive polarizing film 2 were evaluated as in Example 1. The results are shown in Table 2.

[EXAMPLE 3]

An adhesive composition 3 and an adhesive polarizing film 3 were prepared as in Example 1 except that KAYARAD R-712 was changed to APG-700. The physical properties of the prepared adhesive polarizing film 3 were evaluated as in Example 1. The results are shown in Table 2.

[EXAMPLE 4]

An adhesive composition 4 and an adhesive polarizing film 4 were prepared as in Example 1 except that KAYARAD DPCA-60 was changed to KAYARAD RP-1040. The physical properties of the prepared adhesive polarizing film 4 were evaluated as in Example 1. The results are shown in Table 2.

[EXAMPLE 5]

An adhesive composition 5 and an adhesive polarizing film 5 were prepared as in Example 2 except that KAYARAD DPCA-60 was changed to KAYARAD RP-1040. The physical properties of the prepared adhesive polarizing film 5 were evaluated as in Example 2. The results are shown in Table 2.

[EXAMPLE 6]

An adhesive composition 6 and an adhesive polarizing film 6 were prepared as in Example 3 except that KAYARAD DPCA-60 was changed to KAYARAD RP-1040. The physical properties of the prepared adhesive polarizing film 6 were evaluated as in Example 3. The results are shown in Table 2.

[EXAMPLE 7]

An adhesive composition 7 and an adhesive polarizing film 7 were prepared as in Example 1 except that KAYARAD DPCA-60 was changed to KAYARAD THE-330. The physical properties of the prepared adhesive polarizing film 7 were evaluated as in Example 1. The results are shown in Table 2.

[EXAMPLE 8]

An adhesive composition 8 and an adhesive polarizing film 8 were prepared as in Example 2 except that KAYARAD DPCA-60 was changed to KAYARAD THE-330. The physical properties of the prepared adhesive polarizing film 8 were evaluated as in Example 2. The results are shown in Table 2.

[EXAMPLE 9]

An adhesive composition 9 and an adhesive polarizing film 9 were prepared as in Example 3 except that KAYARAD DPCA-60 was changed to KAYARAD THE-330. The physical properties of the prepared adhesive polarizing film 9 were evaluated as in Example 3. The results are shown in Table 2.

[EXAMPLE 10]

An adhesive composition 10 and an adhesive polarizing film 10 were prepared as in Example 1 except that the amount of KAYARAD R-712 mixed was changed from 1.0 part by weight to 16 parts by weight. The physical properties of the prepared adhesive polarizing film 10 were evaluated as in Example 1. The results are shown in Table 2.

[EXAMPLE 11]

An adhesive composition 11 and an adhesive polarizing film 11 were prepared as in Example 1 except that the amount of KAYARAD DPCA-60 mixed was changed from 20 parts by weight to 30 parts by weight. The physical properties of the prepared adhesive polarizing film 11 were evaluated as in Example 1. The results are shown in Table 2.

[EXAMPLE 12]

An adhesive composition 12 and an adhesive polarizing film 12 were prepared as in Example 8 except that the amount of IRGACURE 500 mixed was changed from 4.0 parts by weight to 6.0 parts by weight. The physical properties of the prepared adhesive polarizing film 12 were evaluated as in Example 8. The results are shown in Table 2.

[EXAMPLE 13]

An adhesive composition 13 and an adhesive polarizing film 13 were prepared as in Example 8 except that the amount of CORONATE L mixed was changed from 0.5 parts by weight to 6.0 parts by weight. The physical properties of the prepared adhesive polarizing film 13 were evaluated as in Example 8. The results are shown in Table 2.

[EXAMPLE 14]

An adhesive composition 14 and an adhesive polarizing film 14 were prepared as in Example 8 except that the amount of KBM-403 mixed was changed from 0.4 parts by weight to 1.0 part by weight. The physical properties of the prepared adhesive polarizing film 14 were evaluated as in Example 8. The results are shown in Table 2.

[COMPARATIVE EXAMPLE 1]

An adhesive composition 15 and an adhesive polarizing film 15 were prepared as in Example 1 except that neither KAYARAD R-712 nor KAYARAD DPCA-60 was incorporated. The physical properties of the prepared adhesive polarizing film 15 were evaluated as in Example 1. The results are shown in Table 2.

[COMPARATIVE EXAMPLE 2]

An adhesive composition 16 and an adhesive polarizing film 16 were prepared as in Example 1 except that neither KAYARAD R-712 nor KAYARAD DPCA-60 was incorporated, and that the amount of CORONATE L mixed was changed from 0.5 parts by weight to 4.0 parts by weight. The physical properties of the prepared adhesive polarizing film 16 were evaluated as in Example 1. The results are shown in Table 2.

[COMPARATIVE EXAMPLE 3]

An adhesive composition 17 and an adhesive polarizing film 17 were prepared as in Example 2 except that 10

parts by weight of KAYARAD NPGDA and 20 parts by weight of KAYARAD DPCA-60 were changed to 30 parts by weight of KAYARAD NPGDA and 10 parts by weight of KAYARAD DPCA-60, respectively. The physical properties of the prepared adhesive polarizing film 17 were evaluated as in Example 2. The results are shown in Table 2.

[COMPARATIVE EXAMPLE 4]

An adhesive composition 18 and an adhesive polarizing film 18 were prepared as in Example 3 except that KAYARAD DPCA-60 was changed to KAYARAD DPHA. The physical properties of the prepared adhesive polarizing film 18 were evaluated as in Example 3. The results are shown in Table 2.

[COMPARATIVE EXAMPLE 5]

An adhesive composition 19 and an adhesive polarizing film 19 were prepared as in Example 2 except that IRGACURE 500 was changed to IRGACURE 819. The physical properties of the prepared adhesive polarizing film 19 were evaluated as in Example 2. The results are shown in Table 2.

[COMPARATIVE EXAMPLE 6]

An adhesive composition 20 and an adhesive polarizing film 20 were prepared as in Example 2 except that the amount of KAYARAD DPCA-60 mixed was changed from 20 parts by weight to 55 parts by weight. The physical properties of the prepared adhesive polarizing film 20 were evaluated as in Example 2. The results are shown in Table 2.

[COMPARATIVE EXAMPLE 7]

An adhesive composition 21 and an adhesive polarizing film 21 were prepared as in Example 6 except that the amount of IRGACURE 500 mixed was changed from 4.0 parts by weight to 11 parts by weight. The physical properties of the prepared adhesive polarizing film 21 were evaluated as in Example 6. The results are shown in Table 2.

[COMPARATIVE EXAMPLE 8]

An adhesive composition 22 and an adhesive polarizing film 22 were prepared as in Example 6 except that IRGACURE 500 was not incorporated. The physical properties of the prepared adhesive polarizing film 22 were evaluated as in Example 6. The results are shown in Table 2.

[COMPARATIVE EXAMPLE 9]

An adhesive composition 23 and an adhesive polarizing film 23 were prepared as in Example 7 except that the amount of CORONATE L mixed was changed from 0.5 parts by weight to 11 parts by weight. The physical properties of the prepared adhesive polarizing film 23 were evaluated as in Example 7. The results are shown in Table 2.

[COMPARATIVE EXAMPLE 10]

An adhesive composition 24 and an adhesive polarizing film 24 were prepared as in Example 7 except that CORONATE L was not incorporated. The physical properties of the prepared adhesive polarizing film 24 were evaluated as in Example 7. The results are shown in Table 2.

[COMPARATIVE EXAMPLE 11]

An adhesive composition 25 and an adhesive polarizing film 25 were prepared as in Example 1 except that the amount of KBM-403 mixed was changed from 0.4 parts by weight to 4.0 parts by weight. The physical properties of the prepared adhesive polarizing film 25 were evaluated as in Example 1. The results are shown in Table 2.

[COMPARATIVE EXAMPLE 12]

An adhesive composition 26 and an adhesive polarizing film 26 were prepared as in Example 1 except that KBM-403 was not incorporated. The physical properties of the prepared adhesive polarizing film 26 were evaluated as in Example 1. The results are shown in Table 2.

[Table 1]

Table 1 (parts by weight)

| | Adhesive composition | Acrylic polymer A | KAYARAD R-712 | NPGDA | APG-700 | KAYARAD DPCA-60 | KAYARAD RP-1040 | KAYARAD THE-330 | KAYARAD DPHA | IRGACURE 500 | IRGACURE 819 | CORONATE L | KBM-403 |
|---|---|---|---|---|---|---|---|---|---|---|---|---|---|
| Example 1 | 1 | 100 | 10 | | | 20 | | | | 4.0 | | 0.5 | 0.4 |
| Example 2 | 2 | 100 | | 10 | | 20 | | | | 4.0 | | 0.5 | 0.4 |
| Example 3 | 3 | 100 | | | 10 | 20 | | | | 4.0 | | 0.5 | 0.4 |
| Example 4 | 4 | 100 | 10 | | | | 20 | | | 4.0 | | 0.5 | 0.4 |
| Example 5 | 5 | 100 | | 10 | | | 20 | | | 4.0 | | 0.5 | 0.4 |
| Example 6 | 6 | 100 | | | 10 | | 20 | | | 4.0 | | 0.5 | 0.4 |
| Example 7 | 7 | 100 | 10 | | | | | 20 | | 4.0 | | 0.5 | 0.4 |
| Example 8 | 8 | 100 | | 10 | | | | 20 | | 4.0 | | 0.5 | 0.4 |
| Example 9 | 9 | 100 | | | 10 | | | 20 | | 4.0 | | 0.5 | 0.4 |
| Example 10 | 10 | 100 | 16 | | | 20 | | | | 4.0 | | 0.5 | 0.4 |
| Example 11 | 11 | 100 | 10 | | | 30 | | | | 4.0 | | 0.5 | 0.4 |
| Example 12 | 12 | 100 | | 10 | | | | 20 | | 6.0 | | 0.5 | 0.4 |
| Example 13 | 13 | 100 | | 10 | | | | 20 | | 4.0 | | 6.0 | 0.4 |
| Example 14 | 14 | 100 | | 10 | | | | 20 | | 4.0 | | 0.5 | 1.0 |
| C. Example 1 | 15 | 100 | | | | | | | | 4.0 | | 0.5 | 0.4 |
| C. Example 2 | 16 | 100 | | | | | | | | 4.0 | | 4.0 | 0.4 |
| C. Example 3 | 17 | 100 | | 30 | | 10 | | | | 4.0 | | 0.5 | 0.4 |
| C. Example 4 | 18 | 100 | | | 10 | | | | 20 | 4.0 | | 0.5 | 0.4 |
| C. Example 5 | 19 | 100 | | 10 | | 20 | | | | | 4.0 | 0.5 | 0.4 |
| C. Example 6 | 20 | 100 | | 10 | | 55 | | | | 4.0 | | 0.5 | 0.4 |
| C. Example 7 | 21 | 100 | | | 10 | | 20 | | | 11 | | 0.5 | 0.4 |
| C. Example 8 | 22 | 100 | | | 10 | | 20 | | | | | 0.5 | 0.4 |
| C. Example 9 | 23 | 100 | 10 | | | | | 20 | | 4.0 | | 11 | 0.4 |
| C. Example 10 | 24 | 100 | 10 | | | | | 20 | | 4.0 | | | 0.4 |
| C. Example 11 | 25 | 100 | 10 | | | 20 | | | | 4.0 | | 0.5 | 4.0 |

(continued)

| | Adhesive composition | Acrylic polymer A | KAYARAD R-712 | NPGDA | APG-700 | KAYARAD DPCA-60 | KAYARAD RP-1040 | KAYARAD THE-330 | KAYARAD DPHA | IRGACURE 500 | IRGACURE 819 | CORONATE L | KBM-403 |
|---|---|---|---|---|---|---|---|---|---|---|---|---|---|
| C. Example 12 | 26 | 100 | 10 | | | 20 | | | | 4.0 | | 0.5 | |

C. Example: Comparative Example

(4) Evaluation conditions and criteria for physical property evaluation

<Light leakage resistance test>

(Evaluation method)

Adhesive polarizing films (310 x 385 mm) were bonded to a liquid crystal panel having a size of 19 inches in a cross Nicol state and left to stand in an atmosphere of 60°C and 95% RH (relative humidity) for 240 hours and further in an atmosphere of 23°C and 50% RH (relative humidity) for two hours. Subsequently, the test specimen taken from the atmosphere to a room was arranged in a cross Nicol state. The test specimen was placed in a light box at a color temperature of 5,000 K, and whether light leakage occurred or not was examined by visual observation and by using a digital camera. The result was evaluated on the basis of four-level evaluation criteria described below.

(Evaluation criteria)

A: No light leakage was observed.
B: Light leakage was hardly observed.
C: Light leakage was observed in some degree.
D: Light leakage was noticeably observed.

<Durability test (85°C)>

(Evaluation method)

An adhesive polarizing film (310 x 385 mm) was bonded to non-alkali-treated glass having a size of 19 inches and left to stand in an atmosphere of 85°C for 240 hours and further in an atmosphere of 23°C and 50% RH (relative humidity) for two hours. Subsequently, the non-alkali-treated glass onto which the adhesive polarizing film was bonded was taken from the atmosphere to a room. A change in appearance such as foaming of the adhesive polarizing film was visually observed. The result was evaluated on the basis of four-level evaluation criteria described below.

(Evaluation criteria)

A: No change in appearance such as foaming was observed.
B: A change in appearance such as foaming was hardly observed.
C: A change in appearance such as foaming was observed in some degree.
D: A change in appearance such as foaming was noticeably observed.

<Durability test (60°C/95% RH (relative humidity))>

(Evaluation method)

An adhesive polarizing film (310 x 385 mm) was bonded to non-alkali-treated glass having a size of 19 inches and left to stand in an atmosphere of 60°C and 95% RH (relative humidity) for 240 hours and further in an atmosphere of 23°C and 50% RH (relative humidity) for two hours. Subsequently, the non-alkali-treated glass onto which the adhesive polarizing film was bonded was taken from the atmosphere to a room. A change in appearance such as detachment or foaming of the adhesive polarizing film was visually observed. The result was evaluated on the basis of four-level evaluation criteria described below.

(Evaluation criteria)

A: No change in appearance such as detachment or foaming was observed.
B: A change in appearance such as detachment or foaming was hardly observed.

C: A change in appearance such as detachment or foaming was observed in some degree.
D: A change in appearance such as detachment or foaming was noticeably observed.

<Test of adhesive force to glass>

An adhesive polarizing film (length: 75 mm x width: 25 mm) was bonded to a non-alkali-treated glass plate (325 x 400 mm), and pressure-bonded by rolling a 2-kg roller therealong in a reciprocating manner three times. The glass plate was then left to stand in an atmosphere of 23°C and 50% RH (relative humidity) for two hours. An adhesive force (units: N/25 mm) to glass was measured by a 90-degree peel test (peeling speed: 300 mm/min). This measurement was conducted using two adhesive polarizing films for each type of film. The average of the two measured values was defined as an adhesive force to glass of the adhesive polarizing film.

<Probe tack test>

In accordance with JIS Z0237, an adhesive polarizing film (length: 75 mm x width: 25 mm) was brought into contact with a columnar probe of a probe-tack device for probe tack for one second while applying a constant load in an atmosphere of 23°C and 50% RH (relative humidity). Subsequently, a force ($N/cm^2$) necessary for peeling the probe from the adhesive surface of the test specimen in the vertical direction was measured.
As for the measurement conditions, the diameter of the columnar probe was 5 mm, the contact speed and the peeling speed were each $10 \pm 0.1$ mm per second, the contact load was $0.98 \pm 0.01$ $N/cm^2$, and the contact time was $1.0 \pm 0.1$ seconds.
This measurement was conducted using ten adhesive polarizing films for each type of film. The average of the ten measured values (probe-tack values) was defined as the result. It is possible to determine that when the probe-tack value is 300 to 500 ($N/cm^2$), the adhesive subjected to the measurement has moderate flexibility necessary for maintaining stable adhesion between the polarizing film and the adherend.

<Shear load test>

A marked line was drawn at a position 10 mm from an end in a longitudinal direction of an adhesive polarizing film (length; 100 mm x width; 10 mm). The adhesive polarizing film was bonded to non-alkali-treated glass (length; 50 mm x width; 50 mm, mass; 0.2 kg) using the marked line as a marker such that the bonding area was 10 mm x 10 mm. Thus, a sample for measuring a shear load was prepared.
The sample for measuring a shear load was treated in an autoclave for two hours under the conditions of 50°C and 5 $kgf/cm^2$, and then left to stand for 24 hours in an atmosphere of 23°C and 50% RH (relative humidity).
Next, the adhesive polarizing film adhered to the sample for measuring a shear load was drawn at a shear rate of 0.1 mm/min in a shear direction using a tensile testing machine (manufactured by Instron), and the load was measured. A load when the displacement of the bonded portion between the adhesive polarizing film and the non-alkali-treated glass became 1 mm or when the adhesive polarizing film was detached from the glass was defined as a measured value (maximum shear load) (N).
This measurement was conducted using two adhesive polarizing films for each type of film. The average of the two measured values was defined as the result. Note that the magnitude of the maximum shear load and the magnitude of the tensile strength have a positive correlation.
[Table 2]

Table 2

| | Adhesive polarizing film | Evaluation | | | | | |
|---|---|---|---|---|---|---|---|
| | | Light leakage resistance | Durability (85°C) | Durability (60°C/95% RH) | Adhesive force to glass (g/25 mm) | Probe tack ($N/cm^2$) | Shear load (N) |
| Example 1 | 1 | A | A | A | 300 | 345 | 92.5 |
| Example 2 | 2 | A | A | A | 240 | 315 | 88.5 |
| Example 3 | 3 | A | A | A | 330 | 325 | 89.8 |
| Example 4 | 4 | B | A | A | 515 | 475 | 90.9 |

(continued)

| | Adhesive polarizing film | Evaluation | | | | | |
|---|---|---|---|---|---|---|---|
| | | Light leakage resistance | Durability (85°C) | Durability (60°C/95% RH) | Adhesive force to glass (g/25 mm) | Probe tack ($N/cm^2$) | Shear load (N) |
| Example 5 | 5 | B | A | A | 460 | 420 | 89.9 |
| Example 6 | 6 | B | A | A | 450 | 410 | 89.3 |
| Example 7 | 7 | A | A | A | 560 | 400 | 85.7 |
| Example 8 | 8 | B | A | A | 490 | 440 | 86.8 |
| Example 9 | 9 | B | A | A | 510 | 460 | 84.8 |
| Example 10 | 10 | A | A | A | 380 | 395 | 88.4 |
| Example 11 | 11 | A | A | A | 270 | 305 | 94.5 |
| Example 12 | 12 | A | A | B | 350 | 340 | 89.6 |
| Example 13 | 13 | A | A | A | 340 | 305 | 91.1 |
| Example 14 | 14 | B | A | A | 360 | 380 | 84.9 |
| Comparative Example 1 | 15 | D | B | B | 1,300 | 590 | 8.3 |
| Comparative Example 2 | 16 | C | C | C | 910 | 540 | 70.6 |
| Comparative Example 3 | 17 | C | C | D | 780 | 495 | 67.6 |
| Comparative Example 4 | 18 | C | C | D | 300 | 165 | 81.3 |
| Comparative Example 5 | 19 | D | C | D | 500 | 215 | 51.5 |
| Comparative Example 6 | 20 | B | C | D | 150 | 115 | 92.4 |
| Comparative Example 7 | 21 | B | D | D | 250 | 220 | 15.7 (detached) |
| Comparative Example 8 | 22 | D | C | D | 250 (cohesive failure) | 625 | 6.7 |
| Comparative Example 9 | 23 | B | C | C | 260 | 190 | 88.4 |
| Comparative Example 10 | 24 | B | C | C | 590 | 485 | 84.7 |
| Comparative Example 11 | 25 | C | B | C | 175 | 175 | 36.2 (detached) |
| Comparative Example 12 | 26 | B | C | D | 335 | 360 | 27.8 (detached) |

As is apparent from Table 2, all the adhesive polarizing films (adhesive polarizing films 1 to 14) produced by using adhesive compositions of the present invention exhibited a certain degree of adhesive force (adhesive force to glass). In addition, from the results of the shear load test and the probe tack test, it was confirmed that both a high tensile strength and moderate flexibility could be exhibited. Furthermore, changes in appearance under the high-temperature condition (85°C) and the high-temperature and high-humidity condition (60°C/95% RH) were small, and light leakage

under the high-temperature and high-humidity condition was also small. Thus, it was confirmed that excellent light leakage resistance and durability could be exhibited.

In contrast, in the adhesive polarizing films (adhesive polarizing films 15, 16, and 18) produced by using adhesive compositions that did not contain at least one of the components (B) and (C) (Comparative Examples 1, 2, and 4), it was found that, from the results of the shear load test and the probe tack test, it was not possible to achieve a combination of a high tensile strength and moderate flexibility. Furthermore, it was confirmed that the adhesive polarizing films 1 to 14 could achieve a combination of excellent light leakage resistance and durability (under the high-temperature condition and the high-temperature and high-humidity condition), whereas the adhesive polarizing films 15, 16, and 18 could not exhibit excellent light leakage resistance or durability (under the high-temperature condition and the high-temperature and high-humidity condition), or a satisfactory combination of light leakage resistance and durability could not be achieved even when one of these characteristics was excellent.

It was also confirmed that the adhesive polarizing films (adhesive polarizing films 17 and 20) in the case where the amount of component (B) mixed was larger than 20 parts by weight (Comparative Example 3) and the case where the amount of component (C) mixed was larger than 50 parts by weight and the total amount of component (B) and component (C) was larger than 60 parts by weight (Comparative Example 6) could not achieve a combination of a high tensile strength and moderate flexibility. It was also confirmed that, in the adhesive polarizing films 17 and 20, excellent light leakage resistance or durability (under the high-temperature condition and the high-temperature and high-humidity condition) could not be exhibited, or a satisfactory combination of light leakage resistance and durability could not be achieved even when one of these characteristics was excellent.

Focusing on the photopolymerization initiator, it was confirmed that the adhesive polarizing films (adhesive polarizing films 19, 21, and 22) in the case where a non-hydrogen abstraction-type photopolymerization initiator was used (Comparative Example 5), the case where the amount of hydrogen abstraction-type photopolymerization initiator mixed was larger than 10 parts by weight (Comparative Example 7), and the case where no hydrogen abstraction-type photopolymerization initiator was incorporated (Comparative Example 8) could not achieve a combination of a high tensile strength and moderate flexibility. It was also confirmed that, in the adhesive polarizing films 19, 21, and 22, excellent light leakage resistance or durability (under the high-temperature condition and the high-temperature and high-humidity condition) could not be exhibited, or a satisfactory combination of light leakage resistance and durability could not be achieved even when one of these characteristics was excellent.

Focusing on the isocyanate crosslinking agent, the adhesive polarizing films (adhesive polarizing films 23 and 24) in the case where the amount of isocyanate crosslinking agent mixed was larger than 10 parts by weight (Comparative Example 9) and the case where no isocyanate crosslinking agent was incorporated (Comparative Example 10) could not achieve a combination of a high tensile strength and moderate flexibility, though the adhesive polarizing films exhibited good light leakage resistance. Furthermore, durability (under the high-temperature condition and the high-temperature and high-humidity condition) of these adhesive polarizing films was inferior to that of the adhesive polarizing films 1 to 14.

Focusing on the silane compound, the adhesive polarizing films (adhesive polarizing films 25 and 26) in the case where the amount of silane compound mixed was larger than 3 parts by weight (Comparative Example 11) and the case where no silane compound was incorporated (Comparative Example 12) could not achieve a combination of a high tensile strength and moderate flexibility, though the adhesive polarizing films exhibited good light leakage resistance or excellent durability (under the high-temperature condition). Furthermore, durability under the high-temperature and high-humidity condition of these adhesive polarizing films was inferior to that of the adhesive polarizing films 1 to 14.

Industrial Applicability

According to the present invention, it is possible to provide a radiation-curable adhesive composition for an optical component that can exhibit a high tensile strength and flexibility suitable for enabling stable adhesion between the optical component and an adherend when light-cured, and that can exhibit excellent durability even under high-temperature conditions and high-temperature and high-humidity conditions.

It is also possible to provide an adhesive optical component that can sufficiently prevent light leakage even under high-temperature conditions and high-temperature and high-humidity conditions and that exhibits excellent durability, specifically, that can suppress occurrence of detachment, foaming, and the like and can suppress a change in appearance because the adhesive optical component includes the above adhesive composition.

## Claims

**1.** A radiation-curable adhesive composition for an optical component comprising:

100 parts by weight of a (meth)acrylic copolymer (A) composed of 80% to 99.8% by mass of an alkyl (meth)acrylate monomer (a1), 0.1% to 10% by mass of a carboxyl-group-containing (meth)acrylic monomer (a2), and 0.1% to 10% by mass of a hydroxyl-group-containing (meth)acrylic monomer (a3) (where the total amount of (a1) to (a3) is 100% by mass), the (meth)acrylic copolymer (A) having a glass transition temperature of -20°C or lower and a weight-average molecular weight of 500,000 to 2,000,000;
2 to 20 parts by weight of a radiation-curable acrylic compound (B) having two (meth)acryloyl groups in its molecule;
3 to 50 parts by weight of a radiation-curable acrylic compound (C) represented by general formula (1) or (2) below:

[Chem. 1]

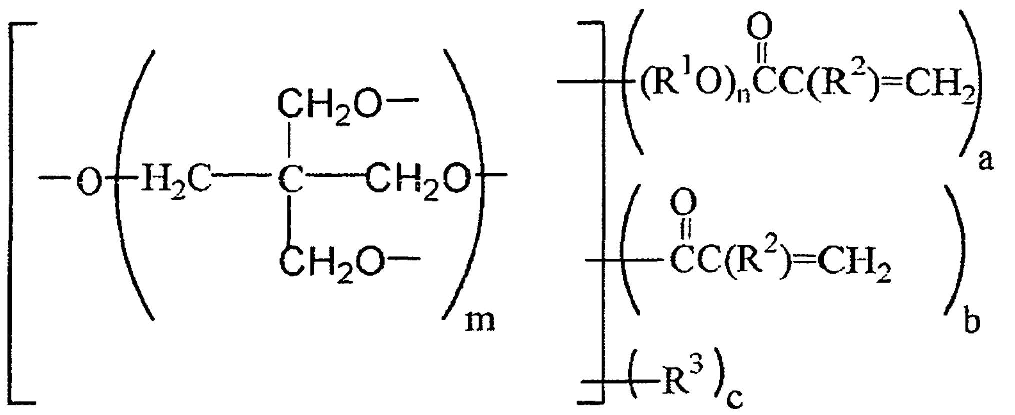

(1)

(where m is an integer of 1 to 5,
a is an integer of 1 or more, b is an integer of 0 or more, c is an integer of 0 or more, the sum of a and b is 3 to 10, and the condition a + b + c = 2m + 2 is satisfied,
n is an integer of 2 to 6,
$R^1$ represents an alkyl group which may have a substituent and which has 2 to 4 carbon atoms,
$R^2$ represents hydrogen or a methyl group, and
$R^3$ represents a hydrogen atom, a hydrocarbon group which may have a substituent, an oxygen-containing functional group which may have a substituent, or a nitrogen-containing functional group which may have a substituent)

[Chem. 2]

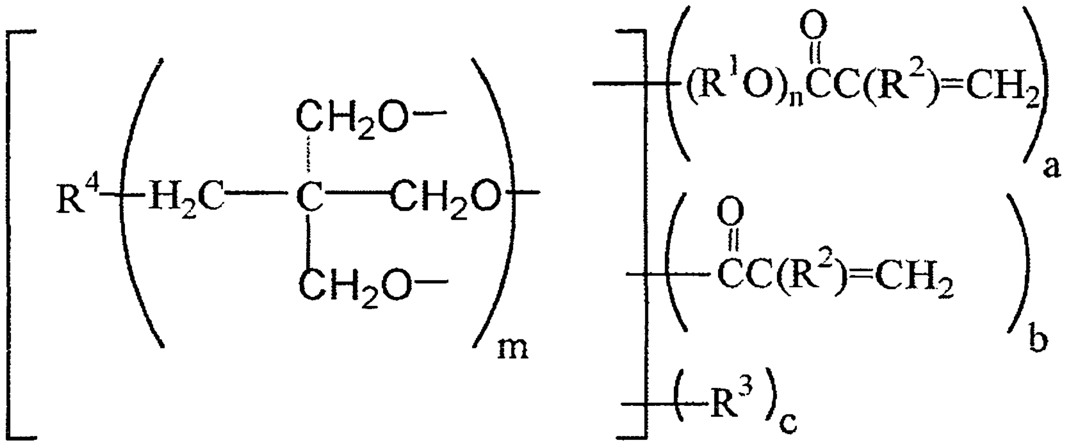

(2)

(where m is an integer of 1 to 5,
a is an integer of 1 or more, b is an integer of 0 or more, c is an integer of 0 or more, the sum of a and b is 3 to 10, and the condition a + b + c = 2m + 1 is satisfied,
n is an integer of 2 to 6,
$R^1$ represents an alkyl group which may have a substituent and which has 2 to 4 carbon atoms,
$R^2$ represents hydrogen or a methyl group, and
$R^3$ and $R^4$ each independently represent a hydrogen atom, a hydrocarbon group which may have a substituent, an oxygen-containing functional group which may have a substituent, or a nitrogen-containing functional group which may have a substituent);
0.1 to 10 parts by weight of a hydrogen abstraction-type photopolymerization initiator (D);
0.01 to 10 parts by weight of an isocyanate crosslinking agent (E) having two or more isocyanate groups in its molecule; and
0.01 to 3 parts by weight of a silane compound (F) having an organic functional group having reactivity with a carboxyl group,
wherein the total amount of the amount of radiation-curable acrylic compound (B) mixed and the amount of radiation-curable acrylic compound (C) mixed is 5 to 60 parts by weight.

2. The radiation-curable adhesive composition for an optical component according to Claim 1, wherein the radiation-curable acrylic compound (B) is a compound represented by general formula (3) below:

[Chem. 3]

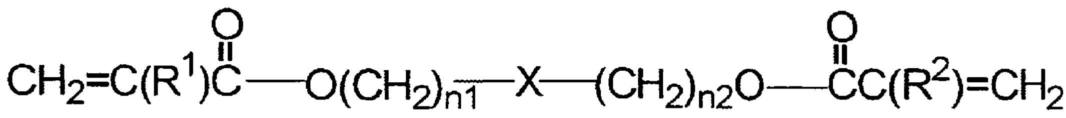

(3)

(where n1 and n2 each independently represent an integer of 0 to 10, $R^1$ and $R^2$ each independently represent a hydrogen atom or a methyl group,
X represents a linear or branched divalent alkyl group having 1 to 20 carbon atoms, a linear or branched divalent cycloalkyl group having 3 to 20 carbon atoms, an alkoxyl group represented by general formula (4) below, or a diphenylalkyl group represented by general formula (5) below)

[Chem. 4]

$$-(OC_nH_{2n})_m- \qquad (4)$$

(where n represents an integer of 1 to 20, and m represents an integer of 1 to 10)

[Chem. 5] $-Ar-C_nH_{2n}-Ar$ (5)

(where n represents an integer of 1 to 20, and Ar represents an aryl group which may have a substituent.)

3. The radiation-curable adhesive composition for an optical component according to Claim 1 or 2, wherein the radiation-curable acrylic compound (B) is at least one compound selected from the group consisting of neopentyl glycol diacrylate, 1,9-nonanediol diacrylate, dimethylol tricyclodecane diacrylate, polypropylene glycol diacrylate, polyethylene glycol diacrylate, bisphenol A polyethylene glycol diacrylate, and α-phenyl-ω-acryloyloxypolyoxyethylene-formaldehyde polycondensate.

4. The radiation-curable adhesive composition for an optical component according to Claim 1, wherein the radiation-curable acrylic compound (C) is at least one compound selected from the group consisting of acrylic acid ester of dipentaerythritol caprolactone, acrylic acid ester of pentaerythritol ethylene oxide, and acrylic acid ester of trimethylolpropane ethylene oxide.

5. An adhesive optical component comprising an optical component and an adhesive layer provided on one surface or both surfaces of the optical component, the adhesive layer being composed of the adhesive composition according to any one of Claims 1 to 4.

6. The adhesive optical component according to Claim 5, wherein the optical component is an optical film selected from the group consisting of a polarizing film, a retardation film, an elliptically polarizing film, an antireflection film, a luminance-improving film, a light diffusion film, and an optical compensation film.

## Patentansprüche

1. Durch Strahlung härtbare Klebstoffzusammensetzung für eine optische Komponente, die enthält:

100 Gewichtsteile eines (Methyl)acrylcopolymers (A), das zusammengesetzt ist aus 80 bis 99,8 Massen-% eines Alkyl(meth)acrylatmonomers (a1), 0,1 bis 10 Massen-% einer Carboxylgruppe, die (Meth)acrylmonomer (a2) enthält, und 0,1 bis 10 Massen-% einer Hydroxylgruppe, die (Meth)acrylmonomer (a3) enthält (wobei die Gesamtmasse von (a1) bis (a3) 100 Massen-% ergibt), wobei das (Meth)acrylcopolymer (A) eine Glasübergangstemperatur von -20 °C oder tiefer und ein gewichtsgemitteltes Molekulargewicht von 500000 bis 2000000 aufweist;
2 bis 20 Gewichtsteile einer durch Strahlung härtbaren Acrylverbindung (B), die zwei (Meth)acryloylgruppen in ihrem Molekül aufweist;
3 bis 50 Gewichtsteile einer durch Strahlung härtbaren Acrylverbindung (C), die durch die folgende allgemeine Formel (1) oder (2) dargestellt ist:

[Chem. 1]

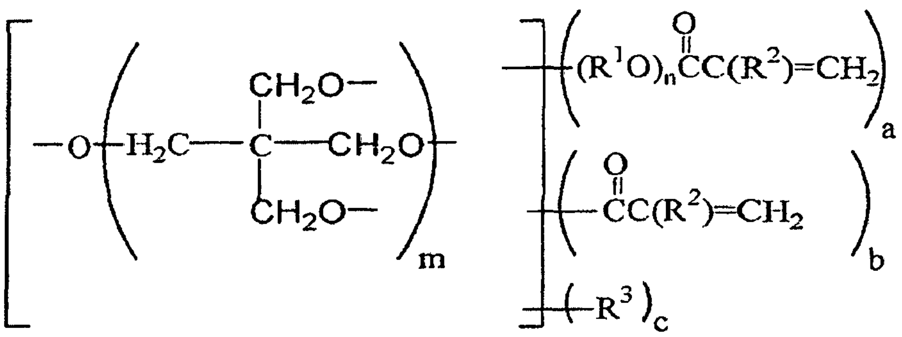

(1)

(wobei m eine ganze Zahl von 1 bis 5 ist,
a eine ganze Zahl von 1 oder größer ist, b eine ganze Zahl von 0 oder größer ist, c eine ganze Zahl von 0 oder größer ist, wobei die Summe von a und b den Betrag von 3 bis 10 ergibt und die Bedingung a + b + c = 2m + 2 erfüllt ist,

n eine ganze Zahl von 2 bis 6 ist,
$R^1$ eine Alkylgruppe darstellt, die einen Substituenten aufweisen kann und 2 bis 4 Kohlenstoffatome aufweist, $R^2$ Wasserstoff oder eine Methylgruppe darstellt, und $R^3$ ein Wasserstoffatom, eine Kohlenwasserstoffgruppe, die einen Substituenten aufweisen kann, eine Sauerstoff enthaltende funktionelle Gruppe, die einen Substituenten aufweisen kann, oder eine Stickstoff enthaltende funktionelle Gruppe, die einen Substituenten aufweisen kann, darstellt)

[Chem. 2]

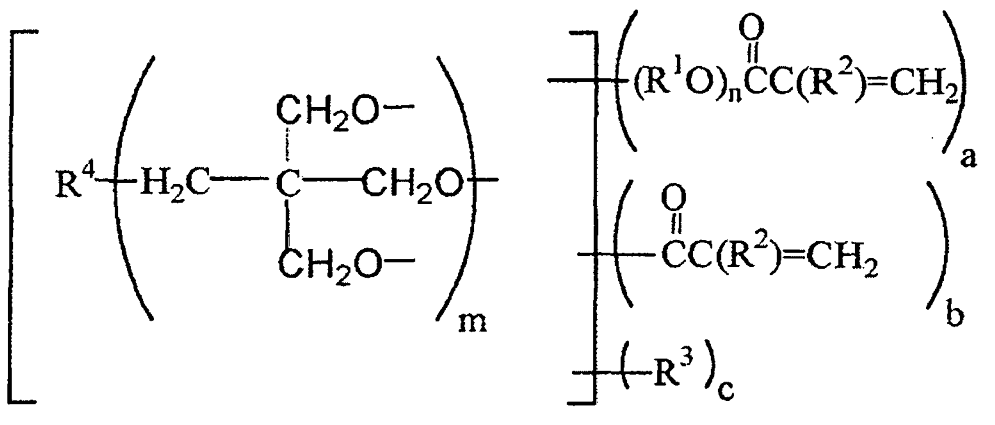

(2)

(wobei m eine ganze Zahl von 1 bis 5 ist,
a eine ganze Zahl von 1 oder größer ist, b eine ganze Zahl von 0 oder größer ist, c eine ganze Zahl von 0 oder größer ist, wobei die Summe von a und b den Betrag von 3 bis 10 ergibt und die Bedingung a + b + c = 2m + 1 erfüllt ist,
n eine ganze Zahl von 2 bis 6 ist,
$R^1$ eine Alkylgruppe darstellt, die einen Substituenten aufweisen kann und die 2 bis 4 Kohlenstoffatome aufweist,
$R^2$ Wasserstoff oder eine Methylgruppe darstellt, und
$R^3$ und $R^4$ jeweils unabhängig voneinander ein Wasserstoffatom, eine Kohlenwasserstoffgruppe, die einen Substituenten aufweisen kann, eine Sauerstoff enthaltende funktionelle Gruppe, die einen Substituenten aufweisen kann, oder eine Stickstoff enthaltende funktionelle Gruppe, die einen Substituenten aufweisen kann, darstellen);
0,1 bis 10 Gewichtsteile von einem Photopolymerisationsinitiator vom Wasserstoffentzugstyp (D);
0,01 bis 10 Gewichtsteile eines Isocyanat-Vernetzungsmittels (E) mit zwei oder mehr Isocyanatgruppen in seinem Molekül; und
0,01 bis 3 Gewichtsteile einer Silanverbindung (F) mit einer organischen funktionellen Gruppe, die eine Reaktivität mit einer Carboxylgruppe aufweist,
wobei die Gesamtmenge der Menge der durch Strahlung härtbaren Acrylverbindung (B) gemischt und der durch Strahlung härtbaren Acrylverbindung (C) gemischt 5 bis 60 Gewichtsteile beträgt.

2. Durch Strahlung härtbare Klebstoffzusammensetzung für eine optische Komponente nach Anspruch 1, wobei die durch Strahlung härtbare Acrylverbindung (B) eine Verbindung ist, die durch die folgende allgemeine Formel (3) dargestellt ist:

[Chem. 3]

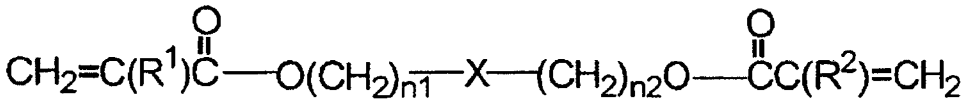

(3)

(wobei n1 und n2 jedes unabhängig voneinander eine ganze Zahl von 0 bis 10 darstellen, $R^1$ und $R^2$ unabhängig voneinander ein Wasserstoffatom oder eine Methylgruppe darstellen,
X eine lineare oder verzweigte divalente Alkylgruppe mit 1 bis 20 Kohlenstoffatomen, eine lineare oder verzweigte divalente Cycloalkylgruppe mit 3 bis 20 Kohlenstoffatomen, eine Alkoxylgruppe, die durch die folgende allgemeine Formel (4) dargestellt ist, oder eine Diphenylalkylgruppe, die durch die allgemeine Formel (5) unten dargestellt ist, darstellt)

[Chem. 4]

$$-(OC_nH_{2n})_m- \quad (4)$$

(wobei n eine ganze Zahl von 1 bis 20 darstellt und m eine ganze Zahl von 1 bis 10 darstellt)

[Chem. 5] **$-Ar-C_nH_{2n}-Ar-$** (5)

(wobei n eine ganze Zahl von 1 bis 20 darstellt und Ar eine Arylgruppe darstellt, die einen Substituenten aufweisen kann.)

**3.** Durch Strahlung härtbare Klebstoffzusammensetzung für eine optische Komponente nach Anspruch 1 oder 2, wobei die durch Strahlung härtbare Acrylverbindung (B) mindestens eine Verbindung ist, die ausgewählt ist aus der Gruppe, die besteht aus Neopentylglycoldiacrylat, 1,9-Nonandioldiacrylat, Dimethyloltricyclodecandiacrylat, Polypropylenglycoldiacrylat, Polyethylenglycoldiacrylat, Bisphenol-A-polyethylenglycoldiacrylat und α-Phenyl-ω-acryloyloxypolyoxyethylenformaldehyd-polykondensat.

**4.** Durch Strahlung härtbare Klebstoffzusammensetzung für eine optische Komponente nach Anspruch 1, wobei die durch Strahlung härtbare Acrylverbindung (C) mindestens eine Verbindung ist, die ausgewählt ist aus der Gruppe, die besteht aus Acrylsäureester von Dipentaerythritcaprolacton, Acrylsäureester von Pentaerythritethylenoxid und Acrylsäureester von Trimethylolethylenoxid.

**5.** Optische Klebstoffkomponente, die eine optische Komponente und eine Klebstoffschicht enthält, die auf einer Oberfläche oder auf beiden Oberflächen der optischen Komponente vorgesehen ist, wobei die Klebstoffschicht aus der Klebstoffzusammensetzung nach einem der Ansprüche 1 bis 4 zusammengesetzt ist.

**6.** Optische Klebstoffkomponente nach Anspruch 5, wobei die optische Komponente ein optischer Film ist, der ausgewählt ist aus der Gruppe, die aus einem Polarisierungsfilm, einem Verzögerungsfilm, einem elliptisch polarisierenden Film, einem Antireflexionsfilm, einem die Leuchtdichte verbessernden Film, einem Lichtstreuungsfilm und einem optischen Kompensationsfilm besteht.

## Revendications

**1.** Composition adhésive durcissable par rayonnement pour un composant optique, comportant :

100 parties en poids d'un copolymère (méth)acrylique (A) composé de 80 % à 99,8 % en masse d'un monomère de (méth)acrylate d'alkyle (a1), 0,1 % à 10 % en masse d'un monomère (méth)acrylique contenant un groupe carboxyle (a2), et 0,1 % à 10 % en masse d'un monomère (méth)acrylique contenant un groupe hydroxyle (a3) (où la quantité totale de et 200 % en masse) (a3) (où la quantité totale de (a1) à (a3) représente 100 % en

masse), le copolymère (méth)acrylique (A) ayant une température de transition vitreuse inférieure ou égale à - 20 °C et une masse moléculaire moyenne en masse de 500 000 à 2 000 000 ;

2 à 20 parties en poids d'un composé acrylique durcissable par rayonnement (B) ayant deux groupes (méth) acryloyle dans sa molécule ;

3 à 50 parties en poids d'un composé acrylique durcissable par rayonnement (C) représenté par la formule générale (1) ou (2) ci-dessous :

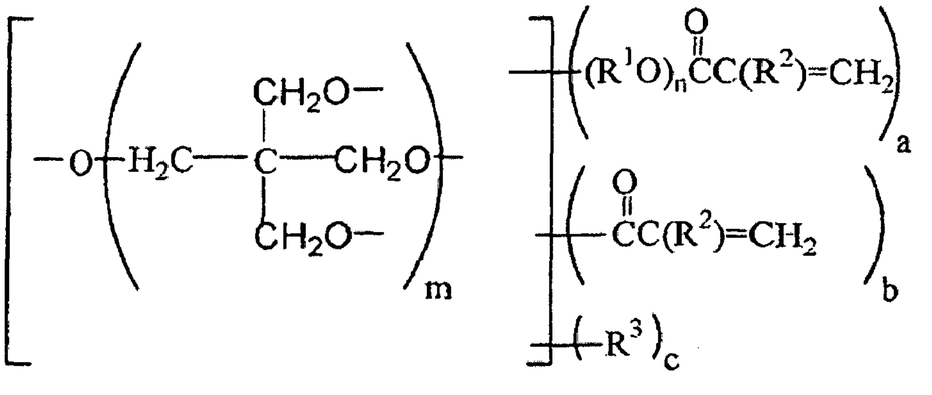

(1)

(où m est un entier de 1 à 5,

a est un entier supérieur ou égal à 1, b est un entier supérieur ou égal à 0, c est un entier supérieur ou égal à 0, la somme de a et b est de 3 à 10, et la condition a + b + c = 2m + 2 est satisfaite,

n est un entier de 2 à 6,

$R^1$ représente un groupe alkyle qui peut avoir un substituant et qui possède 2 à 4 atomes de carbone,

$R^2$ représente l'hydrogène ou un groupe méthyle, et

$R^3$ représente un atome d'hydrogène, un groupe hydrocarboné qui peut avoir un substituant, un groupe fonctionnel contenant de l'oxygène qui peut avoir un substituant, ou un groupe fonctionnel contenant de l'azote qui peut avoir un substituant)

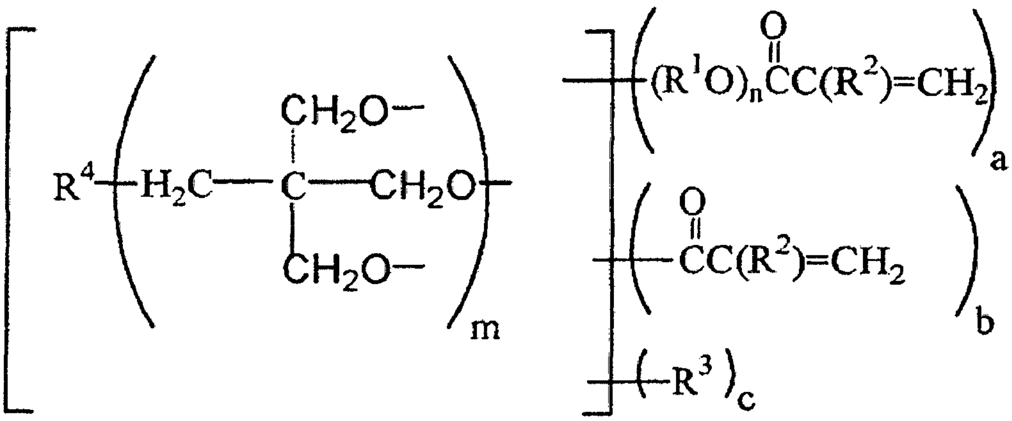

(2)

(où m est un entier de 1 à 5,

a est un entier supérieur ou égal à 1, b est un entier supérieur ou égal à 0, c est un entier supérieur ou égal à 0, la somme de a et b est de 3 à 10, et la condition a + b + c = 2m + 1 est satisfaite,

n est un entier de 2 à 6,

$R^1$ représente un groupe alkyle qui peut avoir un substituant et qui possède 2 à 4 atomes de carbone,

$R^2$ représente l'hydrogène ou un groupe méthyle, et

$R^3$ et $R^4$ représentent chacun indépendamment un atome d'hydrogène, un groupe hydrocarboné qui peut avoir un substituant, un groupe fonctionnel contenant de l'oxygène qui peut avoir un substituant, ou un groupe fonctionnel contenant de l'azote qui peut avoir un substituant) ;

0,1 à 10 parties en poids d'un initiateur de photopolymérisation de type à abstraction d'hydrogène (D) ;

0,01 à 10 parties en poids d'un agent de réticulation d'isocyanates (E) possédant deux ou plus de deux

groupes isocyanates dans sa molécule ; et

0,01 à 3 parties en poids d'un composé de silane (F) ayant un groupe fonctionnel organique ayant une réactivité avec un groupe carboxyle,

dans laquelle la quantité totale de la quantité du composé acrylique durcissable par rayonnement (B) mélangé et la quantité du composé acrylique durcissable par rayonnement (C) mélangé est de 5 à 60 parties en poids.

2. Composition adhésive durcissable par rayonnement pour un composant optique selon la revendication 1, dans laquelle le composé acrylique durcissable par rayonnement (B) est un composé représenté par la formule générale (3) ci-dessous :

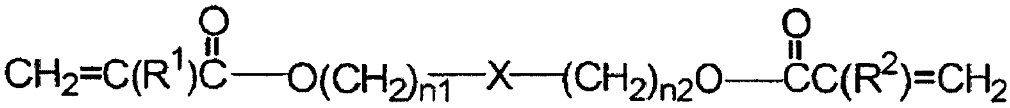

(3)

(où n1 et n2 représentent chacun indépendamment un entier de 0 à 10, $R^1$ et $R^2$ représentent chacun indépendamment un atome d'hydrogène ou un groupe méthyle,

X représente un groupe alkyle divalent linéaire ou ramifié possédant 1 à 20 atomes de carbone, un groupe cycloalkyle divalent linéaire ou ramifié possédant 3 à 20 atomes de carbone, un groupe alcoxyle représenté par la formule générale (4) ci-dessous, ou un groupe diphénylalkyle représenté par la formule générale (5) ci-dessous)

$$-(OC_nH_{2n})_m- \quad (4)$$

(où n représente un entier de 1 à 20, et m représente un entier de 1 à 10)

$$\textbf{-Ar-}C_nH_{2n}\textbf{-Ar} \quad (5)$$

(où n représente un entier de 1 à 20, et Ar représente un groupe aryle qui peut avoir un substituant).

3. Composition adhésive durcissable par rayonnement pour un composant optique selon la revendication 1 ou 2, dans laquelle le composé acrylique durcissable par rayonnement (B) est au moins un composé choisi parmi le groupe constitué de diacrylate de néopentyl glycol, diacrylate de 1,9-nonanediol, diacrylate de diméthylol tricyclodécane, diacrylate de polypropylène glycol, diacrylate de polyéthylène glycol, diacrylate de bisphénol A polyéthylène glycol, et polycondensat de formaldéhyde α-phényl-ω-acryloyloxypolyoxyéthylène.

4. Composition adhésive durcissable par rayonnement pour un composant optique selon la revendication 1, dans laquelle le composé acrylique durcissable par rayonnement (C) est au moins un composé choisi parmi le groupe constitué d'un ester d'acide acrylique de dipentaérythritol caprolactone, d'un ester d'acide acrylique d'oxyde éthylénique de pentaérythritol, et d'un ester d'acide acrylique d'oxyde éthylénique de triméthylolpropane.

5. Composant optique adhésif comportant un composant optique et une couche adhésive disposée sur une surface ou sur les deux surfaces du composant optique, la couche adhésive étant composée de la composition adhésive selon l'une quelconque des revendications 1 à 4.

6. Composant optique adhésif selon la revendication 5, dans lequel le composant optique est un film optique choisi parmi le groupe constitué d'un film polarisant, d'un film de retardement, d'un film elliptiquement polarisant, d'un film anti-réflexion, d'un film d'amélioration de la luminance, d'un film de diffusion de lumière et d'un film de compensation optique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006316203 A
- JP 2003034781 A